# EUROPEAN PATENT SPECIFICATION

(11) **EP 2 741 588 B1**
(45) Date of publication and mention of the grant of the patent: **17.10.2018**
(21) Application number: 13192860.8
(22) Date of filing: 14.11.2013
(51) Int. Cl.: H05B 37/02

(54) **Self-adapting driver for a light source**
Selbstanpassender Treiber für eine Lichtquelle
Pilote auto-adaptatif pour source de lumière

(30) Priority: 15.11.2012 EP 12192749
(43) Date of publication of application: 11.06.2014
(73) Proprietor: Helvar Oy Ab, 02150 Helsinki (FI)
(72) Inventor: Juslén, Henri, 02150 ESPOO (FI); Vuorio, Pekka, 02150 ESPOO (FI)
(74) Representative: Berggren Oy, Helsinki & Oulu

(56) References cited:
- WO-A1-2010/070520
- US-A- 5 406 173

## Description

### FIELD OF THE INVENTION

The invention relates to control of operation of one or more light sources. In particular, embodiments of the invention relate to an apparatus that is able to adapt one or more control parameters that control operation of the one or more light sources on basis of observed lighting characteristics, as well as to a method and to a computer program for carrying out the adaptation.

### BACKGROUND OF THE INVENTION

A light source, such as a fluorescent lamp, a light emitting diode (LED), a high-intensity discharge (HID) lamp or an incandescent lamp, may be driven with a driver that is adapted to adjust the level of lighting provided by the light source in accordance with observed environmental parameters. Environmental parameters suitable for controlling the adjustment of the level of lighting may be obtained from one or more suitable sensors. As an example, a light sensor may be employed to provide information regarding the prevailing level of ambient light and the driver may be configured to adjust the light intensity of the light source in accordance with the observed level of ambient light. As another example, a proximity sensor may be employed to provide information regarding a person or persons being present in a room served by the light source and the driver may be configured e.g. to switch the light source on or off in accordance with the indication of presence of a person or persons in the room.

However, such arrangements typically require manual configuration of control parameters that control operation of the driver, and hence the light source, upon installation of the driver/light source in order for the driver to correctly react to the information provided by the sensors in its operating environment. Moreover, such procedures may be relatively complex and they are, nevertheless, prone to misconfiguration.

Another class of known arrangements for controlling a light source on basis of environmental parameters relies on a centralized control of a number of light sources, where a central controller obtains information from one or more sensors and coordinates operation of a number of light sources on basis of obtained sensor information. However, such an arrangement typically results in a complex and often also expensive system involving a number of separate components and highly complex configuration of control parameters enabling centralized control and reconfiguration of the characteristics of lighting according to the current need, thereby making it an unattractive choice for lighting solutions where the desired characteristics of lighting remain essentially constant. Moreover, such arrangements typically require reconfiguration of the whole arrangement upon changing the configuration thereof, possibly causing inconvenience of use and maintenance over the life cycle of the arrangement.

A prior art document US 5 406 173 discloses a device for controlling the level of light in an area or room. The device includes a sensor that detects whether the room is occupied, a light meter that detects the level of ambient light entering the room, and circuitry that controls the lights in the room in response to the sensor and light meter.

### SUMMARY OF THE INVENTION

It is an object of the present invention to provide an approach that facilitates automatic and autonomous adaptation, programming or self-configuration of a light source to operate on basis of information provided thereto by one or more sensors, thereby providing straightforward installation that also eliminates the possibility of misconfiguration due to a human error during the installation/configuration process.

The objects of the invention are reached by an apparatus, by a method, by a computer program and by an arrangement as defined by the respective independent claims.

According to a first aspect of the invention, an apparatus for driving a light source of a luminaire is provided. The apparatus comprises a sensor portion configured to obtain sensory information comprising information indicative of observed light level in an area served by the luminaire and presence information indicative of presence of a person in the area served by the luminaire, a control portion configured to control operation of the light source in accordance with the sensory information, including switching the light source on or off in accordance with the presence information, and an adaptation portion for selecting a dimming pattern for use, said dimming pattern to be applied when there is no indication of presence of a person in the area served by the luminaire. The adaptation portion is configured to initiate the adaptation period in response to a request thereto, detect, on basis of observed light levels during the adaptation period, the number of further luminaires serving said area, and select the dimming pattern in accordance with the detected number of further luminaires.

According to a second aspect of the invention, a method for selecting, in a driver apparatus, a dimming pattern for controlling operation of a light source of a luminaire is provided. The light source is arranged to be switched on or off in accordance with presence information indicative of presence of a person in the area served by the luminaire. The method comprises obtaining sensory information comprising information indicative of observed light level in an area served by the luminaire and said presence information and selecting the dimming pattern for use, said dimming pattern to be applied when there is no indication of presence of a person in the area served by the luminaire. The selection of dimming pattern comprises initiating the adaptation period in response to a request thereto, detecting, on basis of observed light level during the adaptation period, the number of further luminaires serving said area, and selecting the dimming pattern in accordance with the detected number of further luminaires.

According to a third aspect of the invention, a computer program for selecting, in a driver apparatus, a dimming pattern for controlling operation of a light source of a luminaire is provided. The computer program comprises one or more sequences of one or more instructions which, when executed by one or more processors, cause the driver apparatus to at least perform the method according to the second aspect of the invention.

The computer program may be embodied on a volatile or a non-volatile computer-readable record medium, for example as a computer program product comprising at least one computer readable non-transitory medium having program code stored thereon, the program code, which when executed by the driver apparatus, causes the driver apparatus at least to perform the operations described hereinbefore for the computer program in accordance with the third aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 schematically illustrates an exemplifying arrangement in accordance with an embodiment of the present invention.
Figure 2 schematically illustrates a driver in accordance with an embodiment of the present invention.
Figure 3 schematically illustrates an exemplifying arrangement in accordance with an embodiment of the present invention.
Figure 4 schematically illustrates a sensor module and an exemplifying arrangement in accordance with an embodiment of the present invention.
Figure 5 schematically illustrates an adaptation module and an exemplifying arrangement in accordance with an embodiment of the present invention.
Figure 6 illustrates a method in accordance with an embodiment of the present invention.
Figure 7 illustrates a method in accordance with an embodiment of the present invention.
Figure 8 illustrates a method in accordance with an embodiment of the present invention.
Figure 9 illustrates a method in accordance with an embodiment of the present invention.
Figure 10 illustrates an apparatus in accordance with an embodiment of the present invention.
Figures 11a to 11d illustrate exemplifying dimming patterns.
Figure 12 illustrates a method in accordance with an embodiment of the present invention.

### DETAILED DESCRIPTION

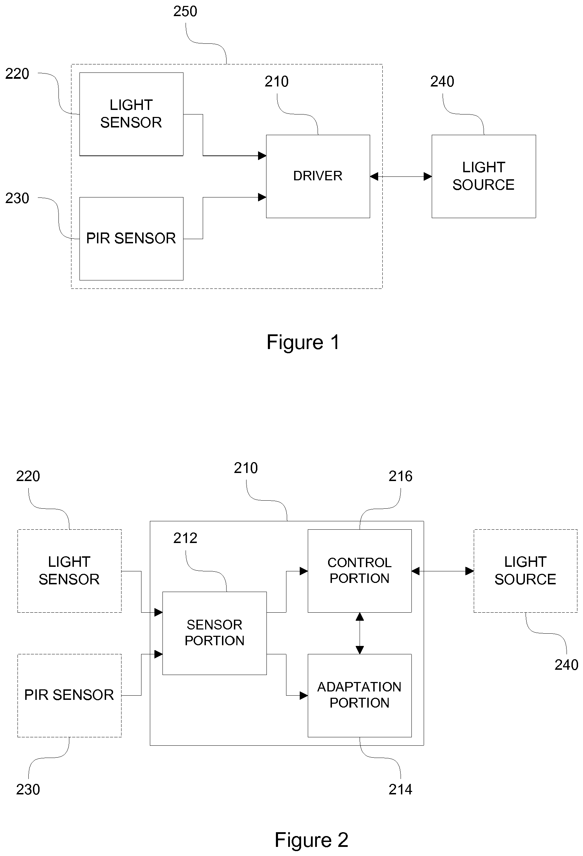

Figure 1 schematically illustrates an exemplifying arrangement 200 comprising a driver 210, a light sensor 220, a passive infrared (PIR) sensor 230 and a light source 240. The driver 210 is configured to drive operation of the light source 240 in accordance with sensory signal(s) provided by the light sensor 220 and the PIR sensor 230.

The driver 210 may be provided as a driver apparatus or as a part of such a driver apparatus. The light sensor 220 may be provided in a separate light sensor apparatus that may be coupled to the driver 210 in the driver apparatus, either directly or via an intervening element. Alternatively, the light sensor 220 may be provided in the same apparatus with the driver 210, e.g. in a driver apparatus. Along similar lines, the PIR sensor 230 may be provided in a separate PIR sensor apparatus that may be coupled to the driver apparatus hosting the driver 210, either directly or via an intervening element. Alternatively, the PIR sensor 230 may be provided in the same apparatus with the driver 210, e.g. in a driver apparatus. As a further alternative, the light sensor 220 and the PIR sensor 230 may be both provided in a sensor apparatus separate from the driver apparatus, which sensor apparatus may be coupled to the driver 210 in a driver apparatus, either directly or via an intervening element.

The driver 210, possibly together with the light sensor 220 and/or the PIR sensor 230 may be provided in a driver apparatus integrated to a luminaire 250, the luminaire 250 comprising an arrangement for attaching the light source 240 and/or arrangement for connecting or coupling the light source 240 to the driver 210. Although depicted in Figure 1 with a single light source 240, the driver 210 may be configured to drive one or more light sources and the luminaire 250 may be provided with an arrangement for attaching the one or more light sources thereto and/or with an arrangement for connecting or coupling the one or more light sources to the driver 210.

Figure 2 schematically illustrates the driver 210. The driver 210 comprises a sensor portion 212 configured to obtain sensory information from the light sensor 220 and possibly from the PIR sensor 230, an adaptation portion 214 for determining one or more control parameters during an adaptation period and a control portion 216 for controlling operation of the light source 240 in accordance with the one or more control parameters and the sensory information.

The driver 210 is, preferably, provided as a self-standing entity that is able to control the operation of the light source 240 and/or the luminaire 250 without control from an external entity, such as a centralized lighting controller controlling operation of a lighting system comprising a number of light sources or luminaires. Moreover, the driver 210 is provided as a self-adapting entity that is able to adapt the one or more control parameters according to the operating environment of the light source 240 and/or the luminaire 250 independently of any centralized control and without the need for manual configuration. In this regard, the driver 210 is capable of autonomously controlling its operation on basis of the sensory information provided thereto and adapting its operation according to its operating environment on basis of the sensory information, as described in detail in examples provided in the following.

The driver 210 typically comprises further portions, for example a power converter for converting an operating power provided to the driver 210 or the driver apparatus to exhibit characteristics suitable for driving the operation of the light source 240 and feedback circuitry between the light source 240 and the power converter in order to drive the power converter in a desired manner. In context of the present invention such driver functionality well known in the art may be conceptually provided as a driver portion of the driver 210. The driver 210 may be provided in a driver apparatus, such as an electrical ballast for driving one or more fluorescent lamps, as a driver apparatus for driving one or more light emitting diodes (LEDs) or as a driver apparatus for driving one or more high-intensity discharge (HID) lamps.

The sensor portion 212 may comprise means for receiving sensory information from the light sensor 220 provided in a separate light sensor apparatus. Similarly, the sensor portion 210 may comprise means for receiving sensory information from the PIR sensor 230 provided in a separate PIR sensor apparatus. As an alternative in this regard, the sensory information may originate from a sensor apparatus comprising both the light sensor 220 and the PIR sensors 230. Alternatively, the sensor portion 212 may comprise the light sensor 220 and/or the PIR sensor.

The sensor portion 212 may comprise a memory or have an access to a memory in the driver 210 for storing the obtained sensory information. The sensor portion 212 may be configured to store such information only during the adaptation period for subsequent analysis and use by the adaptation portion 214 and/or the control portion 216. Alternatively, the sensor portion may be configured to store the sensory information or portions thereof also outside the adaptation periods e.g. as further information to be used as basis of the adaptation and/or to facilitate the control portion 216 controlling the operation of the light source 240 in accordance with the one or more control parameters and the sensory information.

In particular, in order to enable evaluation of the characteristics of the observed light level during the adaptation period, either during or after completion of the adaptation period, the sensor portion 212 may be configured to record and store a sequence of observations on the light level during the adaptation period, the sequence of observations preferably covering the whole duration of the adaptation period. Each observation in the sequence may represent observed light level over an averaging period of predetermined duration, possibly providing a sequence number and/or a timestamp indicating its position in the sequence of observations and/or its timing with respect to the other observations in the sequence. The averaging period may be, for example, in the range from 1 minute to two hours, for example one hour. The averaging process serves to filter, or exclude, the effect of short term reflections and other disturbances in the observed light level, hence making the estimation of the extent of variation in the observed light level more reliable.

The sensory information originating from the light sensor 220 comprises information indicative of observed light level in an area served, i.e. illuminated, by the light source 240. The observed light level may be employed during the adaptation period by the adaptation portion 214 for determination of the one or more control parameters and after completion of the adaptation period by the control portion 216, together with the one or more control parameters, to adjust the light intensity of the light source 240. In particular, the adjustment of the light intensity in accordance with the observed light level after completion of the adaptation period may involve adjustment of the light intensity of the light source 240 such that the control portion 216 is configured to increase or decrease the light intensity of the light source 240 in order to bring the observed light intensity to or as close as possible to a target light level. The target light level may be determined as one of the one or more control parameters on basis of observed light levels during the adaptation period, or a predetermined default value may be employed as the target light level.

The sensory information originating from the PIR sensor 230 comprises presence information indicative of presence of a person or persons in the area served, i.e. illuminated, by the light source 240. The presence information may be employed by the control portion 216 during the adaptation period to switch the light source 240 on or off in accordance with the presence information. In particular, during the adaptation period the control portion 216 is configured to switch the light source on to a predetermined light intensity and to keep the light source switched on at said predetermined light intensity in response to the presence information indicating presence of a person or persons. Conversely, during the adaptation period the control portion 216 is configured to switch the light source 240 off and to keep the light source off in response to the presence information indicating no persons to be present. Switching the light source 240 off in response to the presence information changing from indicating presence of one or more persons into indicating no persons to be present may involve a predetermined delay in switching the light source 240 off. Such a predetermined switch-off delay may be for example in the range from 1 minute to 30 minutes, e.g. 10 minutes.

Alternatively, instead of applying a predetermined switch-off delay during the adaptation period, the switch-off delay may be a variable switch-off delay randomly chosen from a predetermined range of switch-off delays, e.g. from the range from 8 to 12 minutes. Such randomization serves e.g. to facilitate more reliable evaluation of the extent of change in observed light level upon switching the light source on or off during the adaptation period, described in more detail hereinafter, in a scenario where further light sources and/or further luminaires are serving the area served by the luminaire 250.

After completion of the adaptation period the control portion 216 may employ the presence information in a manner similar to that applied during the adaptation period with the exception that the switching off may involve switching from the on state to the off state via a dimming pattern that may involve dimming the light source 240 from the current light intensity to a minimum light intensity during a first period and switching the light source 240 off after a second period following the first period. The dimming pattern may be a predetermined default pattern or the dimming pattern may be determined on basis of observed light level during the adaptation period, as described in more detail hereinafter. Along similar lines, the minimum light intensity may be a predetermined default value or the minimum light intensity may be determined on basis of observed light level during the adaptation period.

The adaptation portion 214 is configured to initiate the adaptation period in response to a request to do so. The request may be provided by the control portion 216. In particular, the control portion 216 may be configured to request the adaptation portion 214 to initiate the adaptation period in response to the activation of the driver 210 e.g. upon installation for the first time and/or upon reactivation of the driver 210 upon installing the driver 210 and the luminaire 250 in a new operating environment, and/or upon replacing the light source 240 with a new one. As further example, the control portion 216 may be configured to request the adaptation portion 214 to initiate the adaptation period in response to the one or more control parameters having no valid values and/or in response to connecting the light sensor 220 and/or the PIR sensor 230 to the driver 210. The one or more control parameters and their current values may be stored in a memory in the driver 210 or in a memory otherwise accessible by the control portion 216.

As a yet further example, alternatively or additionally, the control portion 216 may be configured to request the adaptation portion 214 to initiate the adaptation period in response to a predefined sequence of observations provided by the light sensor 220. As an example, such a predefined sequence may comprise the observed light level falling below a predefined threshold value for a period exceeding a predefined threshold duration while the light source 240 is being switched on. Such a sequence may be created by a user e.g. by covering the light sensor 220 for a period exceeding the predefined threshold duration. This may be convenient e.g. in case the lighting conditions in the area served by the light source 240 have changed and/or in case a malfunction or misconfiguration of the driver 210 is detected or suspected.

In order to determine the one or more control parameters for the control portion 216 to apply after completion of the adaptation period, the adaptation portion 214 is, preferably, configured to cause the control portion 216 to operate the light source 240 at the first predetermined light intensity during the adaptation period regardless of the information indicative of the prevailing observed light level. In other words, between initiation and completion of the adaptation period the adaptation portion 214 is configured to cause the control portion 216 to operate the light source 240 at the first predetermined light intensity when the light source 240 is being switched on. The first predetermined light intensity is a high light intensity, e.g. in the range 90 % to 100 % of the light intensity the light source 240 is capable of providing, preferably, the maximum (i.e. 100 %) light intensity the light source 240 is capable of providing. Applying such a high light intensity during the adaptation period serves to create a reference light intensity for subsequent determination of the one or more control parameters. Moreover, in case the adaptation period is applied upon activation of the driver 210 and/or upon replacing the light source 240 with a new one, applying the high light intensity, preferably the maximum light intensity of the light source 240, serves to ensure proper performance of the light source 240 throughout its life cycle. This latter aspect may be especially pronounced in case the light source 240 is a fluorescent lamp.

The adaptation period preferably has a predetermined duration. In particular, the duration of the adaptation period may be measured as the time of the light source 240 being switched on since initiation of the adaptation period. As an example, the adaptation period may comprise one or more consecutive periods of the light source 240 being switched on, such that the sum of the durations of these one or more periods results in a predetermined overall duration, while the periods of the light source 240 being switched off are not considered as part of the adaptation period. Consequently, the adaptation period is guaranteed to have a known duration that may be set such that it guarantees a sufficient number of observations regarding the light level to be available for the adaptation portion 214.

The predetermined overall duration may be a fixed duration that is independent of the origin or reason for initiating the adaptation period. Such fixed duration may be, for example, duration in the range from 75 to 150 hours, e.g. 100 hours. Alternatively, a first predetermined overall duration may be applied in case the adaptation period is initiated in response to first-time activation of the driver 210 and/or in response to replacing the light source 240 with a new one, whereas a second predetermined overall duration may be applied in case of user-initiated adaptation period.

Alternatively, the duration of the adaptation period may comprise one or more consecutive periods of the light source 240 being switched on during a time period of predetermined duration since initiation of the adaptation period. Hence, instead of considering the on-time of predetermined duration the adaptation period may be considered complete upon a predetermined period of wall-clock time having elapsed since initiation of the adaptation period, this period of wall-clock time covering both on-time and off-time of the light source 240. As an example, the predetermined period of wall-clock time may be in the range from a few days to a few weeks, e.g. one week. Consequently, unlike in the previous example, the duration of the adaptation period is not fixed while on the other hand the adaptation period will be completed after a known period of time.

As a further example, the adaptation period may be considered completed after a predetermined number of switching the light source 240 on and/or off has been detected. This criterion for completion of the adaptation period may be combined with the predetermined duration, e.g. in such a way that the adaptation period is considered complete when both the predetermined number of switching the light source 240 on and/off have been detected and the predetermined period (of on-time or wall-clock time) has elapsed. As a variation of this example, the criterion regarding the predetermined number of times of switching the light source 240 on and/or off may consider only periods of the light source 240 being switched on exceeding a predetermined period, where the predetermined period may be e.g. the averaging period of predetermined duration described hereinbefore.

The adaptation portion 214 may be configured to determine the one or more control parameters in accordance with the extent of variation in the observed light level during the adaptation period. Both the set of one or more control parameters to be defined and the values thereof may be dependent on the extent of variation.

The one or more control parameters to be determined on basis of the observed light level during the adaptation period may comprise a target light level, which target light level may be employed, after completion of the adaptation period, by the control portion 216 in adjustment of the light intensity of the light source 240 in accordance with observed light level, as described hereinbefore. Alternatively or additionally, the one or more control parameters may comprise parameters controlling the speed of said adjustment of the light intensity and/or parameter(s) setting a maximum or a minimum allowed light intensity for the light source 240. The control parameters described hereinbefore serve merely as examples of possible control parameters and the adaptation portion 214 may be configured to determine control parameters of other type instead of or in addition to the ones described hereinbefore.

The adaptation portion 214 may be configured to classify the extent of variation in the observed light level during the adaptation period into one of a plurality of classes. An example applying two classes, low level of variation and a high level variation, is described in the following.

In this regard, the high level of variation in the observed light level during the adaptation period may be considered to indicate that the area served by the light source 240 is also receiving daylight for extended periods of time e.g. through a window, through a skylight, or through another arrangement for letting the daylight to enter the area. On the other hand, the low level of variation in the observed light level during the adaptation period may be considered to indicate that the area served by the light source 240 is not receiving a significant amount of daylight and is hence either in a room without windows or is far from a window or other 'source' of daylight.

The distinction between the low level of variation and the high level of variation in the observed light level may be made for example by determining whether a measure descriptive of the extent of variation in the observed light level derived on basis of the observations recorded during the adaptation period meets a predetermined criterion: the variation in light level may be considered as low in response to said measure meeting the predetermined criterion while the variation may be considered as high in response to said measure failing to meet the predetermined criterion.

The measure descriptive of the extent of variation in the observed light level may be determined, for example, as the difference between a maximum observed light level and a minimum observed light level during the adaptation period. As another example, said measure may be determined as the difference between the 95^{th} percentile and the 5^{th} percentile values of the observed light levels during the adaptation period. Consequently, the variation in observed light level meeting the predetermined criterion may comprise said difference failing to exceed a predetermined threshold and the variation failing to meet the predetermined criterion may comprise said difference exceeding the predetermined threshold. The predetermined threshold may be set, for example, to a value indicating the maximum (or the 95^{th} percentile of the) observed light level exceeding the minimum (or the 5^{th} percentile of the) observed light level by a given percentage, for example by a percentage in the range 20 % to 40%, e.g. 30 %. As another example, the predetermined threshold may be set to a value indicating the maximum (or the 95^{th} percentile of the) observed light level exceeding the minimum (or the 5^{th} percentile of the) observed light level by a certain absolute amount determined as lumens or as other measure descriptive of the light level provided by the light source 240.

As a further example, the measure descriptive of the extent of variation may be determined as the difference between a maximum observed light level and the average observed light level during the adaptation period or as the difference between the average observed light level and a minimum observed light level during the adaptation period. As yet further examples, the measure descriptive of the extent of variation may be based on e.g. the standard deviation of the observed light levels or the variance of the observed light levels with the predetermined criterion comprising a threshold value indicating a minimum value of the standard deviation or the minimum value of the variance to be considered as an indication of high level of variation. Instead of the standard deviation or the variance, another statistical measure derivable from the observed light levels together with a respective predetermined criterion may be applied.

Consequently, the adaptation portion 214 may be configured to determine the target light level on basis of the average observed light level during the adaptation period in response to the low level of variation in observed light level during the adaptation period and to determine the target light level on basis of a minimum observed light level during the adaptation period in response to the high level of variation in observed light level during the adaptation period.

As an example of determining the target light level on basis of the average observed light level, the adaptation portion 214 may be configured to scale the light level values observed on basis of operating the light source 240 at the first predetermined light intensity into scaled light level values at a second predetermined light intensity, wherein the second predetermined light intensity is lower than the first predetermined light intensity, and to determine the target light level as the average of the scaled light level values. An equivalent approach determines the average of the light level values observed on basis of operating the light source 240 at the first predetermined light intensity and determines the target light level by scaling the determined average into the second predetermined light intensity.

Along similar lines, as an example of determining the target light level on basis of the minimum observed light level, the adaptation portion 214 may apply scaling to convert the light level values observed on basis of operating the light source 240 at the first predetermined light intensity or values derived therefrom into scaled value(s) at a third predetermined light intensity, wherein the third predetermined light intensity is lower than the second predetermined light intensity. Consequently, the target light level may be determined by multiplying the minimum value in the scaled domain by a predetermined correction factor, which predetermined correction factor may have, for example, a value in the range from 1 to 1.2, e.g. 1.05.

As an example, the second predetermined light intensity may be in the range from 80 % to 90 % of the first predetermined light intensity, e.g. 85 % of the first predetermined light intensity, whereas the third predetermined light intensity may be, for example, in the range from 75 % to 85 % of first predetermined light intensity, e.g. 80 % of first predetermined light intensity. The most suitable values for the second and third predetermined light intensities may be selected, for example, in view of the type of the light source 240 (e.g. a LED, a fluorescent lamp, a HID lamp, etc.), the purpose of the adaptation period (e.g. an initial adaptation upon installation of a luminaire, an adaptation upon installing a new light source to a pre-installed luminaire, re-adaptation due to change in operating environment, etc.) and/or on basis of the observed light level during the adaptation period or the variation thereof.

Alternatively or additionally, the adaptation portion 214 may be configured to determine, in response to the low level of variation, control parameters controlling the speed of adjustment such that the speed of adjustment towards higher light intensity will be faster than the speed of adjustment towards lower light intensity and to determine, in response to the high level of variation, said control parameters controlling the speed of adjustment such that the speed of adjustment towards higher light intensity will be the same or essentially the same as the speed of adjustment towards lower light intensity. Moreover, the adaptation portion 214 may be configured to determine, in response to the low level of variation, a control parameter limiting the minimum allowed light intensity according to a predetermined minimum light intensity. The minimum allowed light intensity may be, for example, in the range from 70 % to 85 % of the full light intensity of the light source 240, e.g. 80 % of the full light intensity.

Instead of operating the light source at the first predetermined light intensity throughout the adaptation period, the adaption portion 214 may be configured to apply the first predetermined light intensity for a first portion of the adaptation period and to apply a lower light intensity for a second portion of the adaptation period. Selection of the light intensity for the second portion may be made in dependence of the extent of variation in observed light level during the first portion of the adaptation period, e.g. such that that the second predetermined light intensity is applied in response to the observed light intensity during the first portion of the adaptation period exhibiting the low level of variation, whereas the third predetermined light intensity is applied in response to the observed light intensity during the first portion of the adaptation period exhibiting the high level of variation.

In the approach that involves the second portion of the adaptation period making use of light intensity different from that of the first portion, the target light level is, preferably, determined on basis of the observed light levels during the second portion of the adaptation period, whereas the extent of variation in the observed light level may be determined on basis of the first portion of the adaptation period. In particular, the adaptation portion 214 may be configured to determine, in response to the low level of variation in observed light level during the first portion of the adaptation period, the target light level on basis of the average observed light level during the second portion of the adaptation period, and to determine, in response to the high level of variation in observed light level during the first portion, the target light level on basis of a minimum observed light level during the second portion of the adaptation period. Along similar lines, e.g. the control parameter(s) controlling the speed of adjustment and/or the control parameter limiting the minimum allowed light intensity may be in dependence of the extent of variation in the observed light level during the first portion of the adaptation period.

The adaptation portion 214 may be configured to also set or determine values of control parameters other than the target light level and/or control parameters controlling the speed and extent of light level adjustment in dependence of the variation in observed light level during the adaptation period.

As described hereinbefore, the sensory information obtained by the sensor portion 212 may comprise presence information indicative of a presence of a person or persons in the area served by the light source 240 for the PIR sensor 230. As further described hereinbefore, during the adaptation period the control portion 216 may be configured to switch the light source 240 on or off in accordance with the presence information, possibly with applying the switch-off delay before switching the light source 240 off in response to the presence information changing from a state indicating presence of one or more persons into a state indicating no persons to be present.

The adaptation portion 214 may be configured to determine a dimming pattern to be applied by the control portion 216, after completion of the adaptation period, upon switching the light source 240 off. In particular, the adaptation portion 214 may be configured to determine the dimming pattern on basis of the extent of change in observed light level upon switching the light source on or off during the adaptation period. In the following, for clarity and brevity of description, the term on-off change is used to refer to change in observed light level upon switching the light source off and the term off-on change is used to refer to the change in observed light level upon switching the light source on.

In particular, the adaptation portion 214 may be configured to determine the extent of one or more on-off changes during the adaptation period and/or the extent of one or more off-on changes during the adaptation period and to derive one or more measures indicative of the extent of change in observed light level upon switching the light source on or off during the adaptation period. While the one or more measures may be based on both on-off changes and off-on changes, the one or more measures are preferably derived on basis of the on-off changes only in order to avoid e.g. a light source that does not provide the desired light intensity in full immediately after having been switched on distorting the one or more measures. Moreover, relying on on-off changes avoids the need to constantly monitor the observed light level also during off-periods in order to have the information indicating the observed light level before switching the light source 240 on.

A measure regarding an on-off change may be derived on basis of the difference between the observed light level before switching the light source 240 off and after switching the light source 240 off. The observed light levels in this regard may be the instantaneous light levels just before and just after switching the light source 240 off. However, in order to avoid e.g. short-term disturbances in the light source 240 behavior or external surges of light entering the area disturbing the evaluation, the observed light levels in this regard comprise the observed light level averaged over an averaging period of predefined duration immediately preceding the moment of switching off the light source 240 the observed light level averaged over the averaging period immediately following the moment of switching the light source 240 off. The averaging period in this regard may be, for example, in the range from 5 seconds to 1 minute, e.g. 30 seconds. An averaging period closer to the lower end of said range, e.g. 10 seconds, may be applied especially in case a variable switch-off delay described hereinbefore is applied. Similar approach may be applied in derivation of the measure(s) regarding the off-on changes.

As described hereinbefore, the adaptation portion 214 may be configured to cause the control portion 216 to operate the light source 240 at a constant light intensity, e.g. at the first predetermined light intensity, throughout the adaptation period or, alternatively, the adaptation portion 214 may be configured to cause the control portion 216 to operate the light source 240 at different light intensities during a first portion and a second portion of the adaptation period, e.g. at the first predetermined light intensity during the first portion and at the second or third predetermined light intensity during the second portion.

In case the same light intensity is applied throughout the adaptation period, the one or more measures indicative of the extent of change in observed light level upon switching the light source on or off may be determined on basis of any sub-portion of the adaptation period, e.g. over the adaptation period in full. On the other hand, in case the adaptation period is divided into first and second portions of different light intensity where during the first portion the high (e.g. maximum) light intensity of the light source 240 is employed, the one or more measures indicative of the extent of change in observed light level upon switching the light source on or off are preferably be determined on basis of the first portion in full or on basis of a selected sub-portion of the first portion. As further example, in case the adaptation period involves the first and second portions of different light intensity, the one or more measures may be derived on basis of the both portions or sub-portions thereof, provided that suitable scaling in dependence of the light intensity applied during the first portion and the light intensity applied during the second portion is applied in order to compensate for the differences in absolute light intensity between the two portions.

Consequently, the adaptation portion 214 may be configured to select one of a plurality of predetermined dimming patterns in dependence of the one or more measures indicative of the extent of change in observed light level upon switching the light source 240 on or off during the adaptation period.

In particular, the adaptation portion 214 may be configured to evaluate whether the one or more measures indicative of the extent of change indicate a low level of change or a high level of change and to select, in response to the low level of change, a first predetermined dimming pattern and to select, in response to a high level of change, a second predetermined dimming pattern. Examples of predetermined dimming patterns are provided hereinafter. In this regard, the low level of change may be considered to indicate presence of other light sources and/or luminaires within or close to the area served by the light source 240 and/or the luminaire 250, whereas the high level of change may be considered as an indication of the light source 240 and/or the luminaire 250 to be the only light source or luminaire serving the area or nearby areas. Consequently, the one or more control parameters in this regard may be determined such that in case there are also other light sources and/or luminaires serving the area the dimming pattern is set to result in switching the light source 240 off after a relatively long period of time while in case the light source 240 and/or the luminaire 250 is the only one serving the are the dimming pattern is set to result in switching the light source 240 off after a relatively short period of time.

The distinction between the high level of change and the low level of change may be evaluated on basis of a predetermined criterion. In this regard, the one or more measures indicative of the extent of change in observed light level upon switching the light source on or off may comprise, for example, a plurality of such measures, each indicating the percentage the light level after switching the light source 240 off (or before switching the light source 240 on) compared to the light level before switching the light source 240 off (or after switching the light source 240 on), and the predetermined criterion may comprise at least a predetermined portion of the measures indicating said percentage to exceed a predetermined threshold. Consequently, in case the predetermined criterion is met, the plurality of measures are considered to indicate the low level of change, whereas failing to meet the predetermined criterion is considered as an indication of the high level of change. The predetermined threshold in this regard may be, for example, in the range from 10 % to 30 %, e.g. 20 %. The predetermined portion may be e.g. 50 %, while a higher or lower value may be used in order to bias the selection towards the high or low level of change, respectively.

As another example, a single measure may be employed, the single measure being derived as the percentage of the average light level after switching the light source 240 off (or before switching the light source 240 on) compared to the average light level before switching the light source 240 off (or after switching the light source 240 on), and the predetermined criterion may comprise said percentage exceeding a predetermined threshold. As in the previous example, the single measure meeting the predetermined criterion indicates the low level of change whereas a failure to meet the predetermined criterion is considered as an indication of the high level change.

Both the first and the second predetermined dimming patterns may be defined, for example, by a first period of time during which the light intensity of the light source 240 is kept at the current level, e.g. at the level adjusted by the control portion in accordance with the prevailing observed light level and the target light level, followed by a second period of time during which the light intensity is gradually adjusted from the current light intensity to a predetermined low light intensity, and further followed by a third period of time during which the light intensity is kept at the predetermined low intensity and after which the light source 240 is switched off.

Preferably, the first period of time is the same or essentially the same for the first and the second predetermined dimming patterns, whereas the second period of time for the first predetermined dimming pattern is longer than or equal to that of the second predetermined dimming pattern. Moreover, the third period of time for the first predetermined dimming pattern is preferably substantially longer than that of the second predetermined dimming pattern. As examples, the first period of time may be in the range from 5 to 20 minutes, e.g. 10 minutes, the second period of time for the first predetermined dimming pattern may be in the range from 10 to 25 minutes, e.g. 20 minutes while the second period of time for the second predetermined dimming pattern may be in the range from 10 to 20 minutes, e.g. 15 minutes. Moreover, the third period of time for the first predetermined dimming pattern may be in the range from 90 to 150 minutes, e.g. 120 minutes, whereas the third period of time for the second predetermined dimming pattern may be in the range from 10 to 20 minutes, e.g. 15 minutes.

As described hereinbefore, the applicable dimming pattern for the driver 210 may be selected or defined in dependence of the number of (further) luminaires serving the area or space served by the luminaire 250. The number of luminaires may be indicated e.g. as presence or absence of further luminaires serving the area/space or as the (estimated) number of (further) luminaires serving the area, and hence the adaptation portion 214 may be configured to select or define the dimming pattern in view of presence or absence of further luminaires serving the area/space or in consideration of the (estimated) number of further luminaires serving the area/space. The adaptation portion 214 may be arranged to detect the presence or absence of further luminaires or to detect the number of further luminaires serving the area/space on basis of the observed light levels. In the following, an example in this regard is provided.

In this example, the sensor portion 212 is configured to obtain sensory information, as described hereinbefore in more detail. The sensory information comprises, at least, information indicative of observed light level in the area/space served by the luminaire 250 and presence information indicative of presence of a person in the area served by the luminaire 250. The control portion 216 is configured to control operation of the light source 240 in accordance with the obtained sensory information. This control includes switching the light source 240 on or off in accordance with the presence information, as (also) described hereinbefore. The adaptation portion 214 is configured to initiate the adaptation period in response to a request, to detect the number of further luminaires serving said area/space on basis of the observed light levels during the adaptation period and to select or define the dimming pattern in accordance with the determined number of further luminaires.

In this example, the control portion 216 may be configured to operate the light source 240 at a predetermined light intensity throughout the adaptation period regardless of the information indicative of observed light level. This light intensity may be e.g. the first predetermined (high) light intensity described hereinbefore, preferably the full light intensity the light source 240 is capable of providing. Moreover, during the adaptation period the control portion 216 may be arranged to switch the light source 240 on or off in accordance with the presence information as (also) described hereinbefore, Hence, the dimming pattern is not applied during the adaptation period but the information regarding the observed light levels during the adaptation period is used to select and/or define the dimming pattern that is to be applied when switching off the light source 240 after the 'normal' operation of the light source 240 is resumed after completion of the adaptation period.

As the name suggests, a dimming pattern typically involves dimming the light level from the target light level to a lower level according to pattern and timing defined by the dimming pattern. The control portion 216 may be arranged to initiate the selected or defined dimming pattern in response to the presence information switching from a state indicating presence of one or more persons in the area/space served by the luminaire 250 to a state indicating absence of any persons in the area/space. In case the presence information changes to the state indicating presence of one or more persons in the area/space during application of the selected or defined dimming pattern, the application of the dimming pattern is terminated and the control portion 216 reverts to operating the light source 240 in accordance with the target light level. Examples of suitable dimming patterns include the first and second predetermined dimming patterns described hereinbefore. Further examples of dimming patterns are provided in the following.

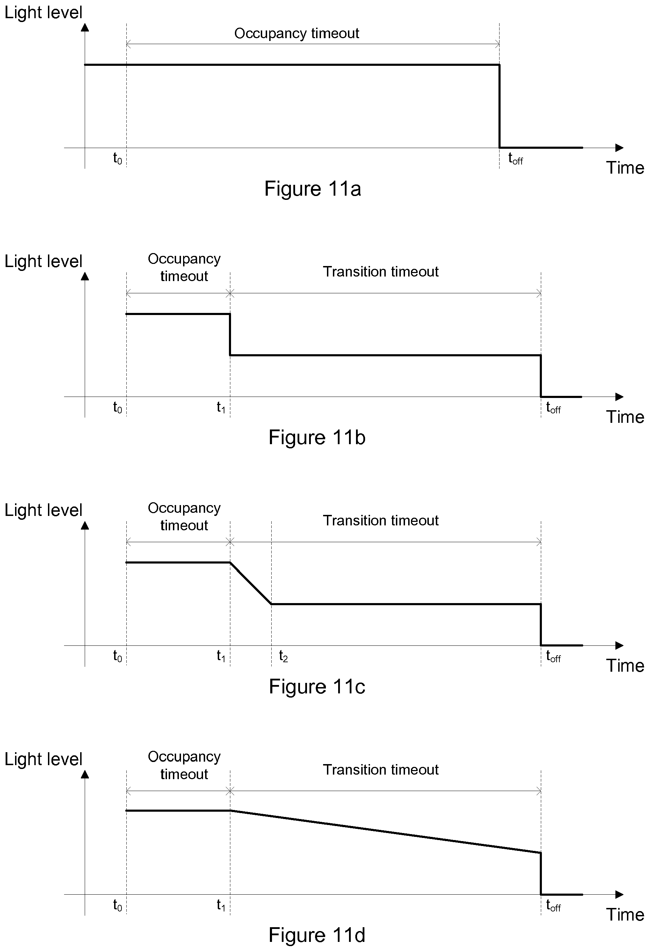

As an example, a dimming pattern may be arranged to cause the control portion 216 to continue operating the light source 240 at the target light level for a first period of time (a occupancy timeout period) and to switch the light source 240 off after the occupancy timeout period. Figure 11a illustrates an example of the light level (bold curve) as a function of time according to such a dimming pattern. In the example of Figure 11a t₀ denotes the time of the presence information changing into the state indicating absence and t_{off} denotes the end of the dimming pattern, the occupancy timeout period hence extending from t₀ to t_{off}. Such a dimming pattern may be especially suitable e.g. for a small storage room or a corresponding space that is served by a single luminaire. Consequently, the light source 240 may be automatically switched off after a relatively short occupancy timeout period (e.g. in the range of from a few minutes to 20 minutes) in order to save energy without a disturbing effect in the overall lighting of the room/space.

Herein, the expression switching off the light source 240 should be construed broadly, not only encompassing completely switching off the light source 240 but also encompassing switching the light source 240 to a standby state and/or switching to operate the light source 240 at a very low light level, thereby (practically) discontinuing illumination provided by the light source 240. In case the applied approach involves operating the light source 240 at the very low level, the control portion 216 may be configured to operate the light source 240 at this very low level for a predetermined period of time following the dimming pattern (or, alternatively, as the final period of the dimming pattern).

As another example, instead of directly switching the light source 240 off after the occupancy timeout period, a dimming pattern may be arranged to cause the control portion 216 to continue operating the light source 240 at the target light level throughout the occupancy timeout period, to switch operating the light source 240 at a lower or decreased light level (an energy saving light level or energy saving level) for a second period of time (a transition timeout period) following the occupancy timeout period, and to switch the light source 240 off after the transition timeout period. Figure 11b illustrates an example of the light level (bold curve) as a function of time according to such a dimming pattern. In the example of Figure 11b t₀ denotes the time of the presence information changing into the state indicating absence, t₁ denotes the end of the occupancy timeout period (and hence start of the transition timeout period and t_{off} denotes the end of the dimming pattern. In this example the occupancy timeout period hence extends from t₀ to t₁ and the transition timeout period extends from t₁ to t_{off}. Such a dimming period involving a transition timeout period may be applied for the case small room/space served by a single luminaire e.g. such that a relatively short transition timeout period (e.g. in the range from a few minutes to 20 minutes) and/or relatively low energy saving level (e.g. in the range of 20 to 30 % light level). Such application of the transition timeout period serves to provide some energy savings while at the same time contributes in avoiding unnecessarily switching the light source 240 on and off.

Moreover, a dimming pattern involving a transition timeout period may be especially suitable e.g. for a large room, area or space that is served by a number of luminaires. In such an environment the transition timeout period (of a relatively long duration e.g. in the range from 20 to 150 minutes) serves to provide some energy savings due to lowered light level while at the same time avoiding a disturbing effect in the overall lighting of the room/area/space by completely discontinuing the illumination in some (unoccupied) parts of the room/area/space while the illumination in some other (occupied) parts of the room/area/space is continued in accordance with the target light level.

In a dimming pattern, a transition from the target level to the energy saving level may be provided as an immediate or essentially immediate change, as also illustrated in the example of Figure 11b. Alternatively, the transition may be provided as a gradual decrease in light level over a transition sub-period in the beginning of the transition timeout period. The duration of the transition sub-period may be in the range from a few seconds to several minutes, even up to the full duration of the transition timeout period. Figure 11c illustrates an example of the light level (bold curve) as a function of time according to a dimming pattern involving a transition sub-period in the beginning of the transition timeout period, the transition sub-period extending from time t₁ to time t₂. Figure 11d illustrates another example of the light level (bold curve) as a function of time according to a dimming pattern involving a transition sub-period. In the example of Figure 11d the transition sub-period covers the transition timeout period in full. The gradual decrease in light level during the transition sub-period may be provided by decreasing the light level e.g. linearly or essentially linearly (or in accordance with a different curve of interest) from the target light level to the energy saving level. As another example, the gradual decrease of light level may be provided in predefined steps implemented at predefined intervals within the transition sub-period. A transition sub-period of similar kind may be applied in transition from the target level to the off state e.g. as a period immediately following the occupancy timeout period and/or in transition from the energy saving level to the off state e.g. as a period immediately following the transition timeout period. Applying a transition sub-period may be especially beneficial in a scenario where a number of luminaires are applied for illumination of a relatively large room/area/space since it facilitates avoiding sudden changes of light level in some parts of the room/area/space while the illumination level in some other parts is not changed.

In view of the foregoing, the selection or definition of the dimming pattern in view of the number (or presence/absence) of further luminaires serving the area may be done in a number of different ways. According to an example in this regard, the adaptation portion 214 is configured to select or define, in response to detecting one or more further luminaires serving the area/space, a dimming pattern that is arranged to cause switching off the light source 240 after a first (long) occupancy timeout period. In contrast, the adaptation portion 214 is configured to select or define, in response to failing to detect further luminaires serving the area/space, a dimming pattern that is arranged to cause switching off the light source 240 after a second (short) occupancy timeout period. In other words, the switch-off delay (due to the dimming pattern) is made longer in case there are further luminaires around in comparison to the scenario where the luminaire 250 is the only one serving the area/space.

According to another example regarding selection or definition of a dimming pattern, the adaptation portion 214 is configured to select or define, in response to detecting one or more further luminaires serving the area/space, a dimming pattern that is arranged to cause the control portion 214 to switch operating the light source 240 at a first energy saving level after a first occupancy timeout period and further to switch off the light source 240 after a first transition timeout period that follows the first occupancy timeout period. In contrast, the adaptation portion 214 is configured to select or define, in response to failing to detect further luminaires serving the area/space, a dimming pattern that is arranged to cause the control portion 214 to switch off the light source 240 after a second occupancy timeout period. The second occupancy timeout period is shorter than the combination of the first occupancy timeout period and the first transition timeout period and, furthermore, typically also shorter than the first occupancy timeout period.

According to a further example regarding selection or definition of a dimming pattern, the adaptation portion 214 is configured to select or define, in response to detecting one or more further luminaires serving the area/space, a dimming pattern that is arranged to cause the control portion 214 to switch operating the light source 240 at a first energy saving level after a first (long) occupancy timeout period and further to switch off the light source 240 after a first (long) transition timeout period following the first occupancy timeout period. In contrast, the adaptation portion 214 is configured to select or define, in response to failing to detect further luminaires serving the area/space, a dimming pattern that is arranged to cause the control portion 214 to switch operating the light source 240 at a second energy saving level after a second (short) occupancy timeout period and further to switch off the light source 240 after a second (short) transition timeout period following the second occupancy timeout period. The combination of the second occupancy timeout period and the second transition timeout period is shorter than the combination of the first occupancy timeout period and the first transition timeout period. Furthermore, typically also the second occupancy timeout period is shorter than the first occupancy timeout period and the second transition timeout period is shorter than the first transition timeout period.

The above examples of setting the temporal duration of the dimming pattern on basis of the presence/absence of further luminaires serving the area/space may be refined by further considering the (estimated) number of further luminaires involved. As an example in this regard, the durations of the occupancy timeout period and/or the transition timeout period may depend on the (estimated) number of further luminaires, thereby making the time period after which the light source 240 is switched to the energy saving level and/or the time period after which the light source 240 is switched off longer with increasing number of further luminaires serving the area/space. As a particular example, the adaptation portion 214 may be configured to select or define the duration of the occupancy timeout period from a predefined set of occupancy timeout period durations (or to select or define a dimming pattern from a predefined set of dimming patterns providing the set of occupancy timeout period durations) in accordance with the (estimated) number of further luminaires.

Along similar lines, additionally or alternatively, the adaptation portion 214 may be configured to select or define the duration of the transition timeout period from a predefined set of transition timeout period durations in accordance with the (estimated) number of further luminaires. The selection or definition of the durations for the occupancy timeout period and the transition timeout period may be made independently of each other. As another example, the duration of the dimming pattern, and hence the combined duration of the occupancy timeout period and the transition timeout period may be set to a fixed predetermined overall duration and the duration of the occupancy timeout period may be dependent on the (estimated) number of further luminaires serving the area/space such that the occupancy timeout period is made longer with increasing number of further luminaires serving the area/space.

Although the light level applied as the energy saving level may be the same regardless of the number of further luminaires serving the area/space, also the light level applied as the energy saving level may depend on the number of further luminaires serving the area/space. In this regard, the adaptation portion 214 may be configured to select or define the energy saving level on basis of the number of further luminaires serving the area/space such that the energy saving level is made higher with increasing number of number of further luminaires detected to serve the area/space. The adaptation portion 214 may be configured to select or define the applicable energy saving level from a predetermined set of light levels in accordance with the number of further luminaires.

There are number of possible ways to detect or estimate the number of (further) luminaires serving the area/space in addition to the luminaire 250. In the following, three examples regarding the detection or estimation of the number of (further) luminaires on basis of observed light levels during the adaptation period are provided.

According to a first example regarding the detection or estimation of the number of (further) luminaires, the adaptation portion 214 is configured to detect or estimate the number of further luminaires on basis of extent of change in observed light level upon switching the light source 240 on or off during the adaptation period. As described hereinbefore, such detection may involve detecting presence of at least one further luminaire in response to said extent of change indicating a low level of change and detecting absence of further luminaires in response to said extent of change indicating a high level of change.

The extent of change may be derived, for example, as the difference between the observed light level before switching the light source 240 off and after switching the light source 240 off or as the ratio between the observed light level after switching the light source 240 off and before switching the light source 240 off. A large difference (e.g. a difference exceeding a predetermined threshold) may serve as an indication of a high level of change (and hence as an indication that there are no further luminaires serving the area/space), whereas a small difference (e.g. a difference smaller than or equal to said predetermined threshold) may serve as an indication of a low level of change (and hence as an indication that there is at least one further luminaire serving the area/space). Similarly, a large ratio of the light level after switching the light source 240 off to the light level before switching the light source 240 off (e.g. a ratio exceeding a predetermined threshold) may serve as an indication of a low level of change (and hence as an indication that there is at least one further luminaire serving the area/space), whereas a small ratio (e.g. a ratio smaller than or equal to said predetermined threshold) may serve as an indication of a high level of change (and hence as an indication that there are no further luminaires serving the area/space). As described hereinbefore, the light levels before/after switching the light source 240 off (or on) may be derived on basis of averaged light levels preceding/following the moment of switching the light source 240 off (or on) or on basis of instantaneous light levels preceding/following the moment of switching the light source 240 off (or on).

As also described hereinbefore, the measure indicating the extent of change (e.g. the difference in or the ratio of the light levels) may be derived on basis of a plurality of occasions of switching the light source 240 off. As an example, such an approach may comprise deriving a separate difference value indicating the difference between the observed light level before switching the light source 240 off and after switching the light source 240 off for a plurality of occasions of switching the light source 240 off during the adaptation period, and computing a single measure descriptive of the difference as the average of the separate differences values. As another example, such an approach may involve deriving a separate ratio indicating the ratio of the observed light level after switching the light source 240 off to the observed light level before switching the light source 240 off for a plurality occasions of switching off the light source 240, and computing a single measure descriptive of the ratio as the average of the separate ratios.

As another example, the single measure may be derived on basis of the difference between average observed light level before switching the light source 240 off and the average observed light level after switching off the light source 240, the averages computed on basis of a plurality of occasions of switching the light source 240 off during the adaptation period. Along similar lines, as a further example, the single measure may be derived as the ratio of the average observed light level after switching the light source 240 off to the average observed light level before switching off the light source 240, the averages computed on basis of a plurality of occasions of switching the light source 240 off during the adaptation period.

According to a second example regarding the detection or estimation of the number of (further) luminaires, the adaptation portion 214 is configured to detect or estimate the number of further luminaires on basis of high-frequency variation or oscillation in the observed light level during the adaptation period. Herein, the variation/oscillation may be applied in detection/estimation of the number of (further) luminaires by a process that involves identifying a sequence of momentary periods of decreased light level, decomposing the identified sequence into zero or more periodic sub-sequences of momentary periods of decreased light level, and detecting the number of further luminaires serving the area on basis of the number of said sub-sequences.

In the second example, the momentary periods of decreased light level correspond to periods of time when one or more of the luminaires serving the area/space are momentarily switched off due to PWM dimming technique, commonly applied to adjust light output level of LED light sources. In the PWM dimming technique, when applying a light intensity below the maximum intensity of a light source, the light source is switched between on and off states at a high frequency. While a human observer does not consider this high-frequency on-off behavior as flickering of light, a light sensor - and hence the sensory information indicative of the observed light level obtained in the sensor portion 212 - is able to indicate also these momentary periods of a light source being switched off due to the PWM dimming applied thereto. When constant or essentially constant light level is being provided by the PWM dimming technique, the resulting high-frequency on-off behavior provides a pattern of off periods exhibiting constant or essentially constant duration at a constant or essentially constant frequency. Hence, in the second example, decomposition of the sequence of momentary periods of decreased light level into sub-sequences comprises decomposing the sequence into one or more sub-sequences that each correspond to the above-described pattern of off periods corresponding to a single light source applying the PWM dimming technique. Consequently, assuming that the light source 240 is operated at the maximum light intensity, the number of patterns directly indicates the number of further light sources serving the area/space, whereas a failure to identify a sequence of momentary periods of decreased light level or a failure to identify a pattern of off periods corresponding to the PWM dimming behavior serves as an indication of no further light sources serving the area/space. In case the light source 240 is operated below its maximum light intensity and PWM dimming technique is applied, one of the detected patterns of off periods originates from the light source 240 itself and hence the number (or presence/absence) of further luminaires must be adjusted accordingly.

A third example regarding the detection or estimation of the number of (further) luminaires is a variation of the second example in that the adaptation portion 214 is arranged to base the decomposition of the sequence of momentary periods of decreased light level on detection of one of a predetermined set of blinking patterns instead of identifying the off patterns caused by the PWM dimming technique. A blinking pattern consists of a number of blinking bursts of predefined duration issued at predefined temporal intervals, each blinking burst exhibiting on-off switching of the respective light source at a predefined frequency. In other words, a blinking pattern is defined by the durations of, the temporal spacing between and on-off switching frequency within blinking bursts of the blinking pattern. In this regard, the adaptation portion 214 is arranged, in response to identifying a sequence of momentary periods of decreased light level, decompose the sequence into sub-sequences by matching one of the predetermined blinking patterns or a combination of two or more of the predetermined blinking patterns to the sequence. Consequently, the number of identified blinking patterns directly indicates the number of further luminaires serving the area/space, whereas a failure to identify a sequence of momentary periods of decreased light level or a failure to identify a blinking pattern serves as an indication of no further light sources serving the area/space.

In context of the third example, the driver 210 may be also store the predetermined set of blinking patterns and may be arranged to apply one of these blinking patterns according to a certain schedule in order to indicate its presence to further luminaires serving the area/space that are able to make use of the blinking patterns in detecting the number (or presence/absence) of further luminaires. As an example, the driver 210, e.g. the control portion 216, may be assigned a predetermined blinking pattern (among the predetermined set of blinking patterns) or the driver 210 may be configured to to randomly choose one of the available blinking patterns for use (e.g. upon installation or initialization of the driver 210) to be applied in the course of operation of the driver 210. Once assigned/chosen, the driver 210 preferably applies the same blinking pattern throughout its operation. The schedule for applying the blinking pattern (i.e. controlling the light source 240 to be turned on and off in accordance with the assigned/chosen blinking pattern) may define the blinking pattern to be applied e.g. at predetermined intervals for a predetermined period of time.

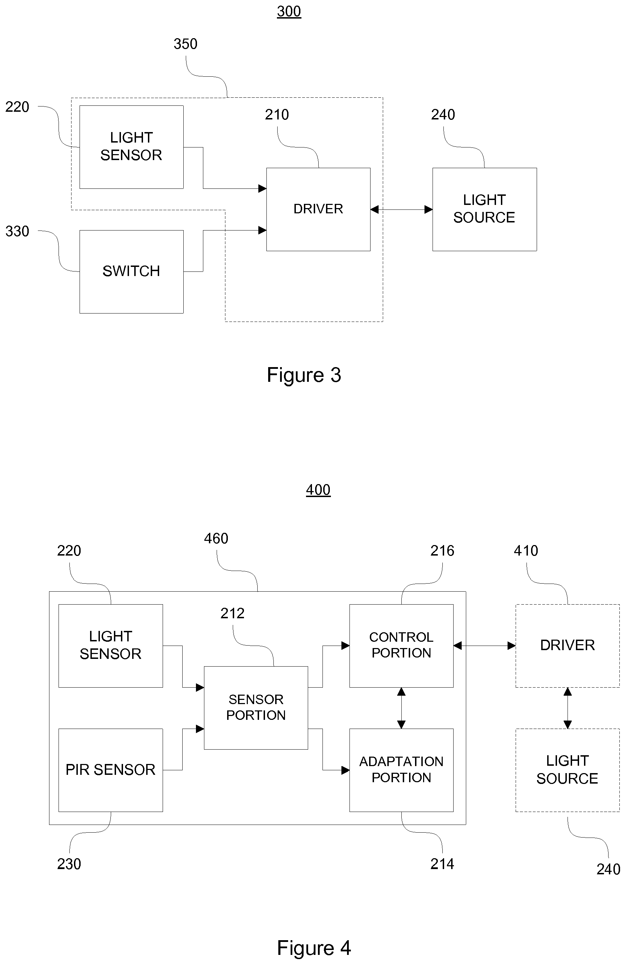

In an alternative arrangement 300, schematically illustrated in Figure 3, the PIR sensor 230 is omitted and the arrangement comprises a user-operable switch 330 connected or coupled to the driver 210, which user-operable switch 330 may be used to provide a signal that causes the control portion 216 to switch the light source 240 on or off. In other words, instead of using the sensor signal originating from the PIR sensor 230 the on/off state of the light source 240 is controlled on basis of user action.

Consequently, in context of the arrangement 300 the sensor portion 212 is only configured to receive sensory information comprising information indicative of observed light level and the control portion 216 is only configured to control operation of the light source 240 and/or the luminaire 350 in accordance with the information indicative of observed light level and in accordance with the one or more control parameters. Moreover, in context of the arrangement 300 the adaptation portion 214 is only configured to determine the one or more control parameters for the control portion 216 for adjustment of the light intensity.

Instead of providing the sensory portion 212, the adaptation portion 214 and the control portion 216 as components of portions of the driver 210 provided in a driver apparatus, these portions may be provided in a sensor unit or a sensor module 460, as schematically illustrated by the arrangement 400 depicted in Figure 4. The operations, procedures and/or functions assigned to the sensor portion 212, to the adaptation portion 214 and to the control portion 216 in context of the arrangement 400 are similar to those described hereinbefore in context of the driver 210 and/or the arrangement 100. Hence, the difference in comparison to the arrangement 100 and to the driver 210 is that in accordance with the arrangement 400 the sensor unit or the sensor module 460 provides the control of the light source 240 via the driver 410 in accordance with the sensory information and in accordance with one or more control parameters and the (self-)adaptation of the one or more control parameters on basis of observed light level during the adaptation period. Although the arrangement 400 is illustrated with both the light sensor 220 and the PIR sensor 230, a variation of the arrangement with the PIR sensor 230 replaced with the user-operable switch as described in context of the arrangement 300 is equally applicable to the arrangement 400.

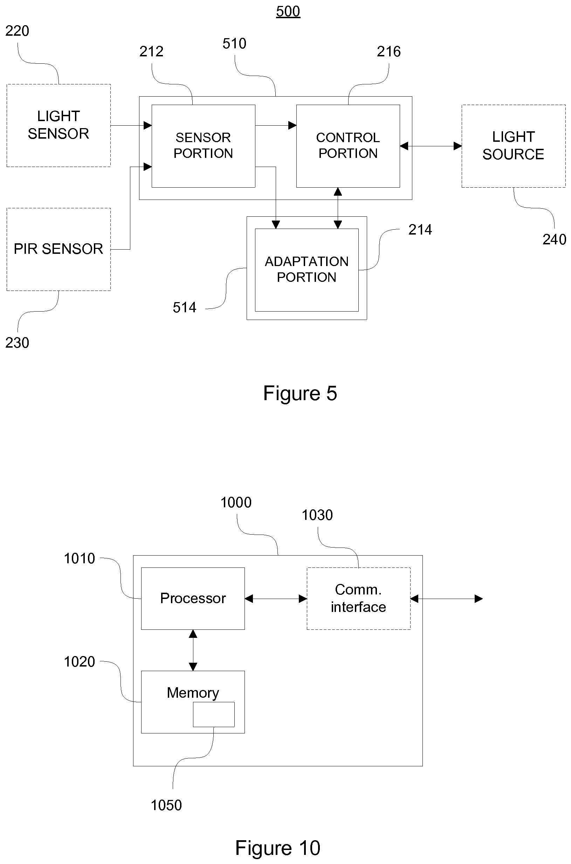

Another variation of providing the sensory portion 212, the adaptation portion 214 and the control portion 216 as components of portions of the driver 210 provided in a driver apparatus, is to provide the adaptation portion 214 in a separate adaptation module 514 connectable to a driver 510 comprising the sensory portion 212 and the control portion 216, the driver 510 provided e.g. in a driver apparatus, as schematically illustrated in by arrangement 500 depicted in Figure 5. The operations, procedures and/or functions assigned to the sensor portion 212, to the adaptation portion 214 and to the control portion 216 in context of the arrangement 500 are similar to those described hereinbefore in context of the driver 210 and/or the arrangement 100. Hence, the difference in comparison to the arrangement 100 and to the driver 210 is that in accordance with the arrangement 500 the adaptation module 514 provides the (self-)adaptation of the one or more control parameters on basis of observed light level during the adaptation period. Although the arrangement 500 is illustrated with both the light sensor 220 and the PIR sensor 230, a variation of the arrangement with the PIR sensor 230 replaced with the user-operable switch as described in context of the arrangement 300 is equally applicable to the arrangement 500.

The operations, procedures and/or functions assigned to the structural units described in the context of the driver 210, e.g. to the sensor portion 212, to the adaptation portion 214 and to the control portion 216 may be divided between these portions in a different manner. Moreover, there may be further portions or units that are configured to perform some of the operations, procedures and/or functions assigned to the sensor portion 212, to the adaptation portion 214 and/or to the control portion 216 as described hereinbefore. On the other hand, the operations, procedures and/or functions assigned to the sensor portion 212, to the adaptation portion 214 and to the control portion 216 may be assigned to a single portion or to a single unit within the driver 210 or within the sensor unit 460.

In particular, the driver 210 may be provided as a driver apparatus for driving a light source of a luminaire or the sensor unit or sensor module 460 may be provided as a sensor apparatus for driving a light source of a luminaire, the driver apparatus or the sensor apparatus comprising means for obtaining sensory information comprising information indicative of observed light level in an area served by the luminaire, means for controlling operation of the luminaire in accordance with the sensory information and in accordance with one or more control parameters, and means for determining the one or more control parameters, the determination comprising initiating an adaptation period in response to a request thereto and determining values for the one or more control parameters on basis of observed light level during the adaptation period.

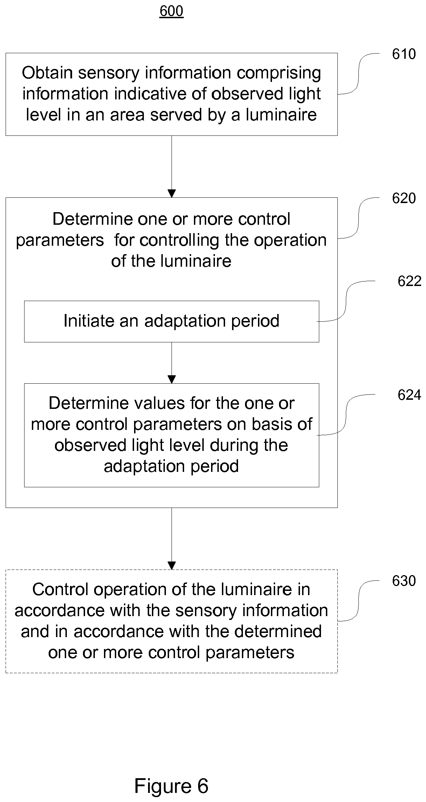

At least some of the operations, procedures and/or functions assigned to the structural units described in the context of the driver 210, e.g. to the sensor portion 212, to the adaptation portion 214 and to the control portion 216 may be provided as steps of a method. As an example of this regard, Figure 6 illustrates a method 600 for determining one or more control parameters for controlling operation of a light source 240 of a luminaire 250. The method 600 may be implemented e.g. by a driver apparatus, by a sensor apparatus or a sensor module, or jointly by two or more of a driver apparatus, a sensor apparatus/module and an adaptation module.

The method 600 comprises obtaining sensory information comprising information indicative of observed light level in an area served by the light source 240 and/or the luminaire 250, as indicated in block 610. The sensory information may further comprise presence information indicative of presence of a person in the area served by the luminaire, as described hereinbefore in context of the sensor portion 212.

The method 600 further comprises determining one or more control parameters useable for controlling the operation of the light source 240 in accordance with the sensory information and in accordance with the one or more control parameters, as indicated in block 620. The determination comprises initiating an adaptation period in response to a request, as indicated in sub-block 622, and determining values for the one or more control parameters on basis of observed light level during the adaptation period, as indicated in sub-block 624. The adaptation period may comprise one or more consecutive periods of the light source being switched on, the combined duration of the one more periods resulting in a predetermined overall duration, as described hereinbefore in context of the adaptation portion 214. When the light source 240 is being switched on, it may be operated at a predetermined light intensity during the adaptation period regardless of the information indicative of observed light level, as described hereinbefore in context of the adaptation portion 214. The determination of the values for the one or more control parameters may comprise determining a value for one or more of the target light level, the speed of adjustment of the light level and the minimum or maximum allowed light intensity in accordance with the extent of variation of the observed light level during the adaptation period, as described hereinbefore in context of the adaptation portion 214. Exemplifying methods in this regard are described hereinafter.

The method 600 may further comprise determination of a dimming pattern on basis of extent of change in observed light level upon switching the light source 240 on or off during the adaptation period, wherein the adaptation portion is configured to determine said extent of change as the difference between the observed light level before switching the light source 240 on/off and after switching the light source 240 on/off, as described in more detail hereinbefore in context of the adaptation portion 214. An exemplifying method in this regard is described hereinafter.

The method 600 may further comprise controlling operation of the luminaire, after completion of the adaptation period, in accordance with the sensory information and in accordance with the determined one or more control parameters, as indicated in block 630. If the controlling indicated in block 630 is included in the method, the method 600 may be, alternatively, viewed as a method for driving the light source 240 of the luminaire 250. This controlling may comprise, for example, adjust the light intensity of the light source in accordance with the observed light level and in accordance with the target light level and with possible further control parameters controlling the speed and extent of the adjustment, as described hereinbefore in context of the adaptation portion 214. The controlling may further comprise switching, during the adaptation period, the light source on or off in accordance with the presence information and switching, after completion of the adaptation period, the light source 240 off via the dimming pattern, as described hereinbefore in context of the control portion 216.

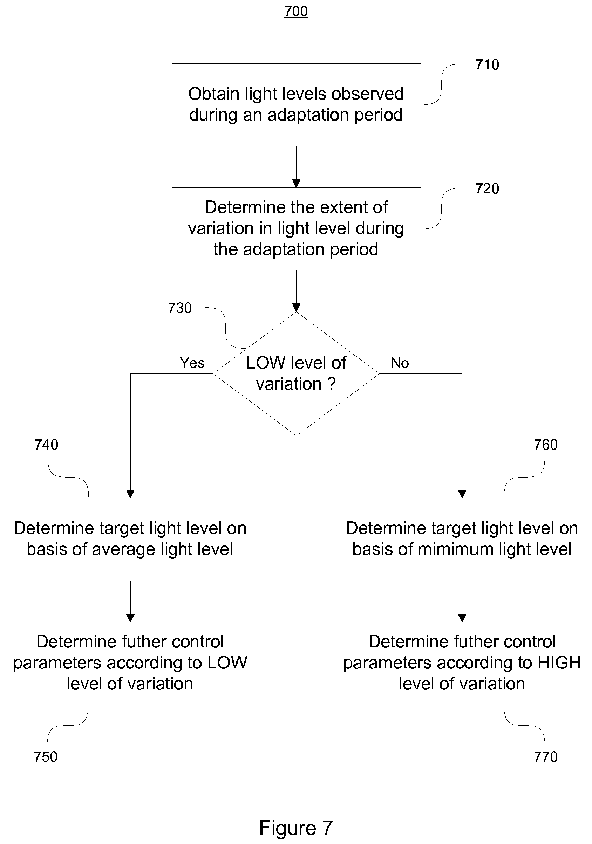

Figure 7 illustrates an exemplifying method 700 for determining or adapting the one or more control parameters for controlling operation of the light source 240 of the luminaire 250. The method 700 commences from obtaining information indicative of observed light level in an area served by the light source 240 and/or the luminaire 250 during the adaptation period, as indicated in block 710. The observed light levels are based on operating the light source 240 at the first predetermined light intensity throughout the adaptation period. The method 700 further comprises determining the extent of variation of the observed light level during the adaptation period, as indicated in block 720.

In block 730 a determination whether the extent of variation meets the criteria for being classified as the low level of variation is made, and in response to the extent of variation meeting the criteria the target light level is determined on basis of the average observed light level during the adaptation period, as indicated in block 740. The determination of the target light level on basis of the average observed light level relies on scaling the observations based on the first predetermined light intensity or intermediate parameters derived therefrom into the second predetermined light intensity and determining the target light level on basis of the scaled observed light levels or the scaled intermediate parameters. In this regard, the second predetermined light intensity is lower than the first predetermined light intensity. From block 740 the method 700 may further proceed into block 750 to determine possible further control parameters, e.g. parameters controlling the speed of light intensity adaptation and/or minimum and/or maximum allowed light intensity, that are considered suitable for an operating environment exhibiting the low level of variation in observed light level.

In case the determination in block 730 indicates the extent of variation failing to meet the criteria for classification as the low level of variation, the extent of variation is considered to be high and the method 700 proceeds into block 760 to determine the target light level on basis of the minimum observed light level during the adaptation period. The determination of the target light level on basis of the minimum observed light level relies on scaling the observations based on the first predetermined light intensity or intermediate parameters derived therefrom into the third predetermined light intensity and determining the target light level on basis of the scaled observed light levels or the scaled intermediate parameters. In this regard, the third predetermined light intensity is lower than the third predetermined light intensity. From block 760 the method 700 may further proceed to block 770 to determine possible further control parameters, e.g. parameters controlling the speed of light intensity adaptation and/or minimum and/or maximum allowed light intensity, that are considered suitable for an operating environment exhibiting the high level of variation in observed light level.

Exemplifying approaches for more detailed description regarding operations, procedures and/or functions within blocks 710 to 770 of the method 700 is provided hereinbefore in context of the sensor portion 212 and the adaptation portion 214.

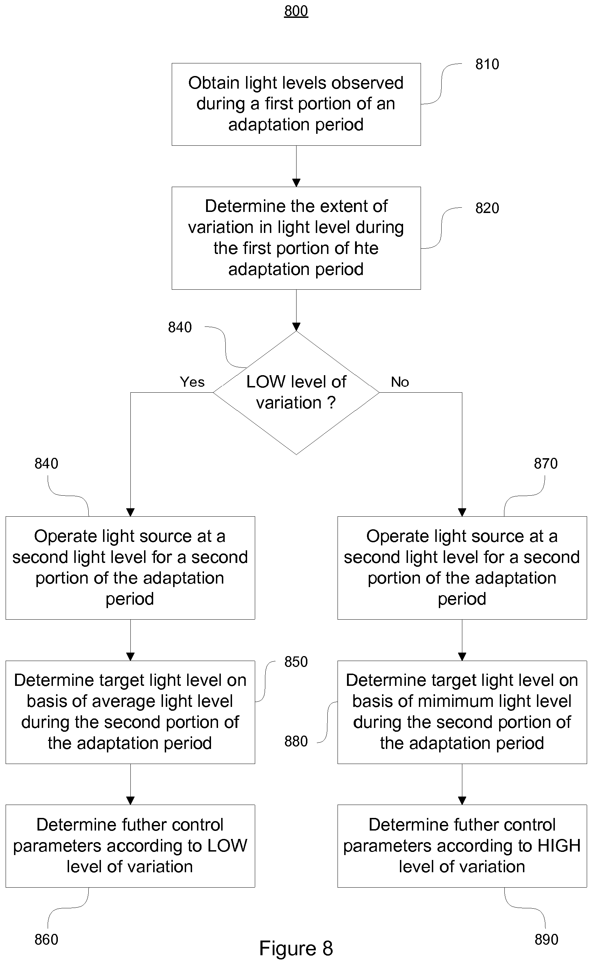

Figure 8 illustrates an exemplifying method 800 for determining or adapting the one or more control parameters for controlling operation of the light source 240 of the luminaire 250. The method 800 commences from obtaining information indicative of observed light level in an area served by the light source 240 and/or the luminaire 250 during a first portion the adaptation period, as indicated in block 810. The observed light levels are based on operating the light source 240 at the first predetermined light intensity throughout the first portion of the adaptation period. The method 800 further comprises determining the extent of variation of the observed light level during the first portion of the adaptation period, as indicated in block 820.

In block 830 a determination whether the extent of variation meets the criteria for being classified as the low level of variation is made, and in response to the extent of variation meeting the criteria the light source 240 is operated at the second predetermined light intensity throughout the second portion of the adaptation period, as indicated in block 840. Consequently, the target light level is determined on basis of the average observed light level during the second portion of the adaptation period, as indicated in block 850, and the method 800 may proceed to block 860 to determine possible further control parameters, e.g. parameters controlling the speed of light intensity adaptation and/or minimum and/or maximum allowed light intensity, that are considered suitable for an operating environment exhibiting the low level of variation.

In case the determination in block 830 indicates the extent of variation failing to meet the criteria for classification as the low level of variation, the extent of variation is considered to be high and the method 800 proceeds to block 870 to operate the light source 240 at the third predetermined light intensity throughout the second portion of the adaptation period. Consequently, the target light level is determined on basis of the minimum observed light level during the second portion of the adaptation period, as indicated in block 880. From block 800 the method 800 may further proceed to block 890 to determine possible further control parameters, e.g. parameters controlling the speed of light intensity adaptation and/or minimum and/or maximum allowed light intensity, that are considered suitable for an operating environment exhibiting the high level of variation in observed light level.

Exemplifying approaches for more detailed description regarding operations, procedures and/or functions within blocks 810 to 890 of the method 800 is provided hereinbefore in context of the sensor portion 212 and the adaptation portion 214.

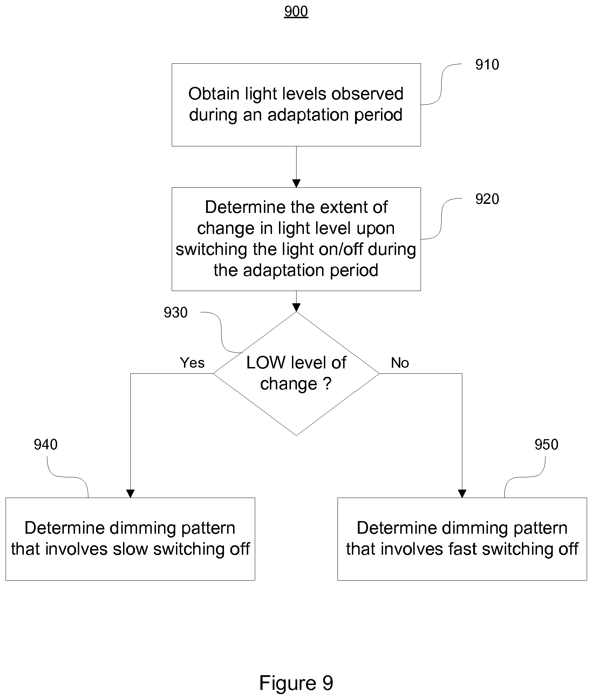

Figure 9 illustrates an exemplifying method 900 for adapting the one or more control parameters for controlling operation of the light source 240 of the luminaire 250. The method 900 commences from obtaining information indicative of observed light level in an area served by the light source 240 and/or the luminaire 250 during the adaptation period or only during the first portion thereof, as indicated in block 910. The observed light levels are based on operating the light source 240 at the first predetermined light intensity. The method 900 further comprises determining the extent of change in light level upon switching the light source 240 on or off during the adaptation period or during the first portion thereof, as indicated in block 920.

In block 930 a determination whether the extent of change meets the criteria for being classified as the low level of change is made, and in response to the extent of variation meeting the criteria a dimming pattern that involves dimming down and switching the light source 240 after a relatively long period of time is selected, e.g. the first predetermined dimming pattern described hereinbefore, as indicated in block 940. In contrast, in case the determination in block 930 indicates the extent of change failing to meet the criteria for classification as the low level of change, the extent of change is considered to be high and the method 900 proceeds to block 950 to select a dimming pattern that involves dimming down and switching the light source 240 after a relatively short period of time, e.g. the second predetermined dimming pattern described hereinbefore.

Exemplifying approaches for more detailed description regarding operations, procedures and/or functions within blocks 910 to 950 of the method 900 is provided hereinbefore in context of the sensor portion 212 and the adaptation portion 214.

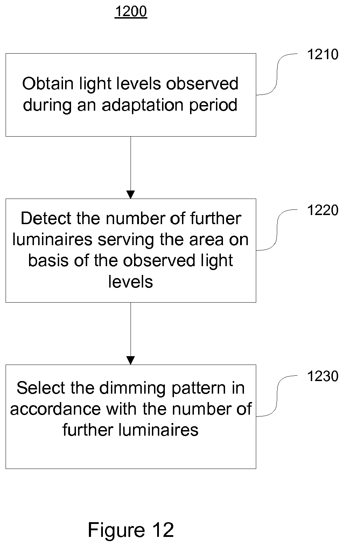

Figure 12 illustrates an exemplifying method 1200 for selecting or determining a dimming pattern for the light source 240 of the luminaire 250 to be applied when there is no indication of presence of a person in the area/space served by the luminaire 250. The method 1200 may applied in the framework of the method 600, the dimming pattern to be selected or defined representing the control parameter(s) to be determined (block 620). The method 1200 may be applied e.g. in the driver 210. The method 1200 commences from obtaining information indicative of observed light level in an area served by the light source 240 and/or the luminaire 250 during the adaptation period, as indicated in block 1210.

The method 1200 further comprises detecting or estimating, on basis of observed light levels during the adaptation period, the number of further luminaires serving the area/space, as indicated in block 1220. As described hereinbefore in context of the adaptation portion 214, the number of further luminaires may be indicated as presence or absence of further luminaires, or the number of further luminaires may be indicated as the detected or estimated number of further luminaires serving the area/space. The method 1200 further comprises selecting or determining the dimming pattern in accordance with the detected number of further luminaires, as indicated in block 1230.

Exemplifying approaches regarding operations, procedures and/or functions within blocks 1210 to 1230 of the method 1200 are described hereinbefore in context of the sensor portion 212 and the adaptation portion 214.

Figure 10 schematically illustrates an exemplifying apparatus 1000 that may be employed for embodying the driver 210, the sensor module 460, the adaptation module 514 or one or more portions thereof. The apparatus 1000 comprises a processor 1010 and a memory 1020, the processor 1010 being configured to read from and write to the memory 1020. The apparatus 1000 may further comprise a communication interface 1030 for enabling communication with another apparatuses. The apparatus 1000 may comprise further components not illustrated in the example of Figure 10.

Although the processor 1010 is illustrated as a single component, the processor 1010 may be implemented as one or more separate components. Although the memory 1020 is illustrated as a single component, the memory 1020 may be implemented as one or more separate components, some or all of which may be integrated/removable and/or may provide permanent/semi-permanent/ dynamic/cached storage.

The apparatus 1000 may be embodied as a special-purpose or as a general purpose device with a sufficient processing capacity. Preferably, however, the apparatus 1000 is embodied as an apparatus dedicated for operating as the the driver 210, as the sensor module 460, as the adaptation module 514 or as one or more portions thereof.

The memory 1020 may store a computer program 1050 comprising computer-executable instructions that control the operation of the apparatus 1000 when loaded into the processor 1010 and executed by the processor 1010. As an example, the computer program 1050 may include one or more sequences of one or more instructions. The computer program 1050 may be provided as a computer program code. The processor 1010 is able to load and execute the computer program 1050 by reading the one or more sequences of one or more instructions included therein from the memory 1020. The one or more sequences of one or more instructions may be configured to, when executed by one or more processors, cause an apparatus, for example the apparatus 1000, to implement the operations, procedures and/or functions described hereinbefore in context of the driver 210, the sensor module 460 or the adaptation module 514.

Hence, the apparatus 1000 may comprise at least one processor 1010 and at least one memory 1020 including computer program code for one or more programs, the at least one memory 1020 and the computer program code configured to, with the at least one processor 1010, cause the apparatus 1000 to perform the operations, procedures and/or functions described hereinbefore in context of the driver 210, the sensor module 460 or the adaptation module 514.

The computer program 1050 may be provided independently of the apparatus, and the computer program 1050 may be provided at the apparatus 1000 via any suitable delivery mechanism. As an example, the delivery mechanism may comprise at least one computer readable non-transitory medium having program code stored thereon, the program code which when executed by an apparatus cause the apparatus at least implement processing to carry out the operations, procedures and/or functions described hereinbefore in context of the driver 210, the sensor module 460 or the adaptation module 514. The delivery mechanism may be for example a computer readable storage medium, a computer program product, a memory device a record medium such as a CD-ROM, a DVD a Blue-ray Disc, a corresponding optical media, an article of manufacture that tangibly embodies the computer program 1050, etc. As a further example, the delivery mechanism may be a signal configured to reliably transfer the computer program 1050.

Reference to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A driver apparatus for driving a light source (240) of a luminaire, the driver apparatus comprising
a sensor portion (212) configured to obtain sensory information comprising information indicative of a sequence of observed light levels in an area served by the luminaire and presence information indicative of presence of a person in the area served by the luminaire;
a control portion (216) configured to control operation of the light source in accordance with the sensory information, including switching the light source on or off in accordance with the presence information;
**characterized in that** the apparatus comprises an adaptation portion (214) for selecting a dimming pattern to be applied by the control portion (216) when there is no indication of presence of a person in the area served by the luminaire after completion of an adaptation period, the adaptation portion configured to initiate the adaptation period in response to a request thereto,
detect, on basis of said obtained sensory information indicative of the sequence of observed light levels during the adaptation period, the number of further luminaires serving said area, and
select the dimming pattern in accordance with the detected number of further luminaires.

2. An apparatus according to claim 1, wherein the adaptation period comprises one or more consecutive periods of the light source being switched on, the combined duration of the one more periods resulting in a predetermined overall duration.

3. An apparatus according claim 1 or 2, wherein the control portion (216) is further configured to operate the light source (240) at a first predetermined light intensity during the adaptation period regardless of the information indicative of the sequence of observed light levels.

4. An apparatus according to any of claims 1 to 3, wherein the adaptation portion (214) is configured to select the dimming pattern by selecting, in response to detecting one or more further luminaires serving the area, a first dimming pattern that is arranged to cause switching off the light source (240) after a first period of time of the presence information not indicating a presence of a person in the area, and
selecting, in response to failing to detect further luminaires serving the area, a second dimming pattern that is arranged to cause switching off the light source (240) after a second period of time of the presence information not indicating a presence of a person in the area, which second period of time is shorter than the first period of time.

5. An apparatus according to claim 4, wherein the first and second dimming patterns are arranged to cause operating the light source (240) at an energy saving light level for a transition timeout period before switching off the light source.

6. An apparatus according to claim 5, wherein the adaptation portion (214) is configured to select the duration of the transition timeout period on basis of the number of detected further luminaires serving the area, such that the duration of the transition timeout period is increased with increasing number of detected further luminaires

7. An apparatus according to claim 5 or 6, wherein the adaptation portion (214) is configured to select the energy saving light level on basis of the number of detected further luminaires, such that the energy saving level is increased with increasing number of detected further luminaires.

8. An apparatus according to any of claims 4 to 7, wherein the adaptation portion (214) is configured to select said first period of time on basis of the number of detected further luminaires serving the area, such that the duration of the first period of time is increased with increasing number of detected further luminaires.

9. An apparatus according to any of claims 5 to 7, wherein said first period of time has a predetermined duration and wherein the adaptation portion (214) is configured to select the duration of the transition timeout period on basis of the number of detected further luminaires serving the area, such that the duration of the transition timeout period is increased with increasing number of detected further luminaires.

10. An apparatus according to any of claims 1 to 9, wherein the adaptation portion (214) is configured to detect the number of further luminaires on basis of extent of change in said observed light levels upon switching the light source on or off during the adaptation period, the detection comprising detecting presence of at least one further luminaire in response to said extent of change indicating a low level of change, and
detecting absence of further luminaires in response to said extent of change indicating a high level of change.

11. An apparatus according to claim 10, wherein the adaptation portion (214) is configured to derive one of said observed light levels before switching the light source (240) on/off as instantaneous light level immediately preceding the moment of switching the light source on/off, and
derive one of said observed light levels after switching the light source (240) on/off as instantaneous light level immediately following the moment of switching the light source on/off.

12. An apparatus according to claim 11, wherein the adaptation portion (214) is configured to detect the number of further luminaires on basis of high frequency variation in the observed light level, the detection comprising identifying a sequence of momentary periods of decreased light level, decomposing the sequence into one or more periodic sub-sequences of momentary periods of decreased light level, and
detecting the number of further luminaires serving the area on basis of the number of said sub-sequences.

13. An apparatus according to claim 12, wherein the adaptation portion (214) is configured to carry out one of the following
identify said sequence of momentary periods of decreased light level as periods during which one or more of the luminaires serving the area are periodically switched off due to PWM dimming, and
decompose the sequence into one or more periodic sub-sequences on basis of one or more predetermined blinking patterns consisting of a number of blinking bursts, a blinking pattern defining a duration of blinking bursts, a frequency of on/off behavior within a blinking burst and temporal spacing between blinking bursts of the blinking pattern.

14. A method for selecting, in a driver apparatus, a dimming pattern for controlling operation of a light source (240) of a luminaire, wherein the light source is arranged to be switched on or off in accordance with presence information indicative of presence of a person in the area served by the luminaire, the method comprising
obtaining (1210) sensory information comprising information indicative of a sequence of observed light levels in an area served by the luminaire and said presence information;
**characterized in that** the method comprises selecting the dimming pattern for use, said dimming pattern to be applied when there is no indication of presence of a person in the area served by the luminaire after completion of an adaptation period, said selecting comprising
initiating the adaptation period in response to a request thereto,
detecting (1220), on basis of said obtained sensory information indicative of the observed light levels during the adaptation period, the number of further luminaires serving said area, and
selecting (1230) the dimming pattern in accordance with the detected number of further luminaires.

15. A computer program for selecting, in a driver apparatus, a dimming pattern for controlling operation of a light source of a luminaire, wherein the light source is arranged to be switched on or off in accordance with presence information indicative of presence of a person in the area served by the luminaire, the computer program including one or more sequences of one or more instructions which, when executed by one or more processors, cause an apparatus to at least perform the following:
obtain (1210) sensory information comprising information indicative of a sequence of observed light levels in an area served by the luminaire and said presence information;
**characterized in that** the apparatus is caused to select the dimming pattern to be applied when there is no indication of presence of a person in the area served by the luminaire after completion of an adaptation period, said selecting comprising
initiating the adaptation period in response to a request thereto, detecting (1220), on basis of said obtained sensory information indicative of the sequence of observed light levels during the adaptation period, the number of further luminaires serving said area, and
selecting (1230) the dimming pattern in accordance with the detected number of further luminaires.

## Patentansprüche

1. Treibervorrichtung zum Betreiben einer Lichtquelle (240) einer Leuchte, die Treibervorrichtung aufweisend
einen Sensorabschnitt (212), der zum Erhalten von sensorischer Information konfiguriert ist, die Information, welche eine Sequenz von beobachteten Lichtgraden in einem Bereich anzeigt, der durch die Leuchte versorgt wird, und Anwesenheitsinformation aufweist, welche die Anwesenheit einer Person in dem Bereich anzeigt, durch die Leuchte versorgt wird;
einen Steuerabschnitt (216), der zum Steuern des Betriebs der Lichtquelle gemäß der sensorischen Information konfiguriert ist, darunter Ein- oder Ausschalten der Lichtquelle gemäß der Anwesenheitsinformation;
**dadurch gekennzeichnet, dass** die Vorrichtung aufweist:
einen Anpassungsabschnitt (214) zum Auswählen eines Dämpfungsmusters, das durch den Steuerabschnitt (216) ausgeübt werden soll, wenn keine Anzeige der Anwesenheit einer Person in dem Bereich, der durch die Leuchte versorgt wird, nach dem Abschluss einer Anpassungsperiode vorliegt, wobei der Anpassungsabschnitt konfiguriert ist zum:
Einleiten der Anpassungsperiode in Reaktion auf eine Anforderung dazu,
Erkennen, auf Grundlage der erhaltenen sensorischen Information, die die Sequenz von beobachteten Lichtgraden während der Anpassungsperiode anzeigt, der Anzahl von weiteren Leuchten, die den Bereich versorgen, und
Auswählen des Dämpfungsmusters gemäß der erkannten Anzahl von weiteren Leuchten.

2. Vorrichtung nach Anspruch 1, wobei die Anpassungsperiode eine oder mehr aufeinanderfolgende Perioden mit eingeschalteter Lichtquelle aufweist, wobei die kombinierte Dauer der einen oder mehr Perioden in einer vorbestimmten Gesamtdauer resultiert.

3. Vorrichtung nach einem der Ansprüche 1 oder 2, wobei der Steuerabschnitt (216) ferner zum Betreiben der Lichtquelle (240) auf einer ersten vorbestimmten Lichtintensität während der Anpassungsperiode konfiguriert ist, ungeachtet der Information, die die Sequenz von beobachteten Lichtgraden anzeigt.

4. Vorrichtung nach einem der Ansprüche 1 bis 3, wobei der Anpassungsabschnitt (214) dazu konfiguriert ist, das Dämpfungsmuster auszuwählen durch:
Auswählen, in Reaktion auf das Erkennen von einer oder mehr weiteren Leuchten, die den Bereich versorgen, eines ersten Dämpfungsmusters, das zum Bewirken des Ausschaltens der Lichtquelle (240) nach einer ersten Zeitperiode, in der die Anwesenheitsinformation keine Anwesenheit einer Person im Bereich anzeigt, angeordnet ist, und
Auswählen, in Reaktion darauf, dass keine weiteren Leuchten erkannt werden, die den Bereich versorgen, eines zweiten Dämpfungsmusters, das zum Bewirken des Ausschaltens der Lichtquelle (240) nach einer zweiten Zeitperiode, in der die Anwesenheitsinformation keine Anwesenheit einer Person im Bereich anzeigt, angeordnet ist, wobei die zweite Zeitperiode kürzer als die erste Zeitperiode ist.

5. Vorrichtung nach Anspruch 4, wobei das erste und zweite Dämpfungsmuster zum Bewirken des Betreibens der Lichtquelle (240) auf einem Energiesparlichtgrad für eine Übergangszeitüberschreitungsperiode vor dem Ausschalten der Lichtquelle angeordnet sind.

6. Vorrichtung nach Anspruch 5, wobei der Anpassungsabschnitt (214) zum Auswählen der Dauer der Übergangszeitüberschreitungsperiode auf Grundlage der Anzahl von erkannten weiteren Leuchten, die den Bereich versorgen, konfiguriert ist, sodass die Dauer der Übergangszeitüberschreitungsperiode mit zunehmender Anzahl von erkannten weiteren Leuchten verlängert wird.

7. Vorrichtung nach einem der Ansprüche 5 oder 6, wobei der Anpassungsabschnitt (214) zum Auswählen des Energiesparlichtgrads auf Grundlage der Anzahl von erkannten weiteren Leuchten konfiguriert ist, sodass der Energiespargrad mit zunehmender Anzahl von erkannten weiteren Leuchten erhöht wird.

8. Vorrichtung nach einem der Ansprüche 4 bis 7, wobei der Anpassungsabschnitt (214) zum Auswählen der ersten Zeitperiode auf Grundlage der Anzahl von erkannten weiteren Leuchten, die den Bereich versorgen, konfiguriert ist, sodass die Dauer der ersten Zeitperiode mit zunehmender Anzahl von erkannten weiteren Leuchten verlängert wird.

9. Vorrichtung nach einem der Ansprüche 5 bis 7, wobei die erste Zeitperiode eine vorbestimmte Dauer aufweist, und wobei der Anpassungsabschnitt (214) zum Auswählen der Dauer der Übergangszeitüberschreitungsperiode auf Grundlage der Anzahl von erkannten weiteren Leuchten, die den Bereich versorgen, konfiguriert ist, sodass die Dauer der Übergangszeitüberschreitungsperiode mit zunehmender Anzahl von erkannten weiteren Leuchten verlängert wird.

10. Vorrichtung nach einem der Ansprüche 1 bis 9, wobei der Anpassungsabschnitt (214) zum Erkennen der Anzahl von weiteren leuchten auf Grundlage des Ausmaßes der Änderung der beobachteten Lichtgrade nach dem Ein- oder Ausschalten der Lichtquelle während der Anpassungsperiode konfiguriert ist, die Erkennung aufweisend
Erkennen des Vorhandenseins von mindestens einer weiteren Leuchte in Reaktion auf das Ausmaß der Änderung, wodurch ein niedriger Änderungsgrad angezeigt ist, und
Erkennen des Nichtvorhandenseins von weiteren Leuchten in Reaktion auf das Ausmaß der Änderung, wodurch ein hoher Änderungsgrad angezeigt ist.

11. Vorrichtung nach Anspruch 10, wobei der Anpassungsabschnitt (214) konfiguriert ist zum:
Ableiten von einem der beobachteten Lichtgrade vor dem Ein-/Ausschalten der Lichtquelle (240) als momentanen Lichtgrad unmittelbar vor dem Ein-/Ausschalten der Lichtquelle, und
Ableiten von einem der beobachteten Lichtgrade nach dem Ein-/Ausschalten der Lichtquelle (240) als momentanen Lichtgrad unmittelbar nach dem Ein-/Ausschalten der Lichtquelle.

12. Vorrichtung nach Anspruch 11, wobei der Anpassungsabschnitt (214) zum Erkennen der Anzahl von weiteren Leuchten auf Grundlage von hoher Frequenzvariation im beobachteten Lichtgrad konfiguriert ist, die Erkennung aufweisend:
Identifizieren einer Sequenz von kurzzeitigen Perioden mit herabgesetztem Lichtgrad,
Aufspalten der Sequenz in eine oder mehr periodische untergeordnete Sequenzen von kurzzeitigen Perioden mit herabgesetztem Lichtgrad, und
Erkennen der Anzahl von weiteren Leuchten, die den Bereich versorgen, auf Grundlage der Anzahl der untergeordneten Sequenzen.

13. Vorrichtung nach Anspruch 12, wobei der Anpassungsabschnitt (214) zum Ausführen von einem des folgenden konfiguriert ist:
Identifizieren der Sequenz von kurzzeitigen Perioden mit herabgesetztem Lichtgrad als Perioden, während denen eine oder mehr der Leuchten, die den Bereich versorgen, aufgrund von PWM-Dämpfung periodisch ausgeschaltet werden, und
Aufspalten der Sequenz in eine oder mehr periodische untergeordnete Sequenzen auf Grundlage von einem oder mehr vorbestimmten Blinkmustern, die aus einer Anzahl von Blinkstößen bestehen, wobei ein Blinkmuster eine Dauer von Blinkstößen, eine Ein-/Ausverhaltensfrequenz innerhalb eines Blinkstoßes und zeitliche Beabstandung zwischen Blinkstößen des Blinkmusters definiert.

14. Verfahren zum Auswählen, in einer Treibervorrichtung, eines Dämpfungsmusters zum Steuern des Betriebs einer Lichtquelle (240) einer Leuchte, wobei die Lichtquelle dazu angeordnet ist, gemäß Anwesenheitsinformation, die Anwesenheit einer Person in dem Bereich, der durch die Leuchte versorgt wird, anzeigt, ein- oder ausgeschaltet zu werden, das Verfahren aufweisend
Erhalten (1210) von sensorischer Information, die Information, welche eine Sequenz von beobachteten Lichtgraden in einem Bereich anzeigt, der durch die Leuchte versorgt wird, und die Anwesenheitsinformation aufweist;
**dadurch gekennzeichnet, dass** das Verfahren das Auswählen des Dämpfungsmusters zum Gebrauch aufweist, wobei das Dämpfungsmuster angewendet werden soll, wenn keine Anzeige der Anwesenheit einer Person in dem Bereich, der durch die Leuchte versorgt wird, nach dem Abschluss einer Anpassungsperiode vorliegt, das Auswählen aufweisend
Einleiten der Anpassungsperiode in Reaktion auf eine Anforderung dazu,
Erkennen (1220), auf Grundlage der erhaltenen sensorischen Information, die die beobachteten Lichtgrade während der Anpassungsperiode anzeigt, der Anzahl von weiteren Leuchten, die den Bereich versorgen, und
Auswählen (1230) des Dämpfungsmusters gemäß der erkannten Anzahl von weiteren Leuchten.

15. Computerprogramm zum Auswählen, in einer Treibervorrichtung, eines Dämpfungsmusters zum Steuern des Betriebs einer Lichtquelle einer Leuchte, wobei die Lichtquelle dazu angeordnet ist, gemäß Anwesenheitsinformation, die Anwesenheit einer Person in dem Bereich, der durch die Leuchte versorgt wird, anzeigt, ein- oder ausgeschaltet zu werden, wobei das Computerprogramm eine oder mehr Sequenzen von einer oder mehr Anweisungen enthält, die, wenn sie durch einen oder mehr Prozessoren ausgeführt werden, bewirken, dass die Vorrichtung mindestens folgendes ausführt:
Erhalten (1210) von sensorischer Information, die Information, welche eine Sequenz von beobachteten Lichtgraden in einem Bereich anzeigt, der durch die Leuchte versorgt wird, und die Anwesenheitsinformation aufweist;
**dadurch gekennzeichnet, dass** bewirkt wird, dass die Vorrichtung das Dämpfungsmuster auswählt, das angewendet werden soll, wenn keine Anzeige der Anwesenheit einer Person in dem Bereich, der durch die Leuchte versorgt wird, nach dem Abschluss einer Anpassungsperiode vorliegt, das Auswählen aufweisend
Einleiten der Anpassungsperiode in Reaktion auf eine Anforderung dazu,
Erkennen (1220), auf Grundlage der erhaltenen sensorischen Information, die die Sequenz von beobachteten Lichtgraden während der Anpassungsperiode anzeigt, der Anzahl von weiteren Leuchten, die den Bereich versorgen, und
Auswählen (1230) des Dämpfungsmusters gemäß der erkannten Anzahl von weiteren Leuchten.

## Revendications

1. Appareil d'excitation pour exciter une source de lumière (240) d'un luminaire, l'appareil d'excitation comprenant
une partie capteur (212) configurée pour obtenir des informations sensorielles comportant des informations indiquant une séquence de niveaux de lumière observés dans une zone desservie par le luminaire et des informations de présence indiquant la présence d'une personne dans la zone desservie par le luminaire ;
une partie de commande (216) configurée pour commander le fonctionnement de la source de lumière en fonction des informations sensorielles, y compris la mise sous tension ou hors de la source de lumière en fonction des informations de présence ;
**caractérisé en ce que** l'appareil comprend une partie d'adaptation (214) pour sélectionner un motif de gradation de l'intensité lumineuse qui doit être appliqué par la partie de commande (216) lorsqu'il n'y a aucune indication de la présence d'une personne dans la zone desservie par le luminaire après l'achèvement d'une période d'adaptation, la partie d'adaptation étant configurée
pour initier la période d'adaptation en réponse à une demande à cette dernière,
pour détecter, sur la base desdites informations sensorielles obtenues indiquant la séquence de niveaux de lumière observés pendant la période d'adaptation, le nombre de luminaires supplémentaires desservant ladite zone, et
pour sélectionner le motif de gradation de l'intensité lumineuse en fonction du nombre détecté de luminaires supplémentaires.

2. Appareil selon la revendication 1, dans lequel la période d'adaptation comprend une ou plusieurs périodes consécutives de la source de lumière qui sont mises sous tension, la durée combinée de la ou des périodes résultant d'une durée globale prédéterminée.

3. Appareil selon la revendication 1 ou 2, dans lequel la partie de commande (216) est en outre configurée pour faire fonctionner la source de lumière (240) à une première intensité de lumière prédéterminée pendant la période d'adaptation sans se soucier des informations indiquant la séquence de niveaux de lumière observés.

4. Appareil selon l'une quelconque des revendications 1 à 3, dans lequel la partie la partie d'adaptation (214) est configurée pour sélectionner le motif de gradation de l'intensité lumineuse en sélectionnant, à la suite de la détection d'un ou de plusieurs luminaires desservant la zone, un premier motif de gradation de l'intensité lumineuse qui est conçu pour provoquer la mise hors tension de la source de lumière (240) après qu'une première période de temps des informations de présence n'indique pas la présence d'une personne dans la zone, et
pour sélectionner, à la suite de l'échec de détecter des luminaires supplémentaires desservant la zone, un second motif de gradation de l'intensité lumineuse qui est conçu pour provoquer la mise hors tension de la source de lumière (240) après qu'une seconde période de temps des informations de présence n'indique pas la présence d'une personne dans la zone, laquelle seconde période de temps est plus courte que la première période de temps.

5. Appareil selon la revendication 4, dans lequel les premier et second motifs de gradation de l'intensité lumineuse sont conçus pour provoquer le fonctionnement de la source de lumière (240) à un niveau de lumière économe en énergie pendant un période de temporisation de transition avant la mise hors tension de la source de lumière.

6. Appareil selon la revendication 5, dans lequel la partie d'adaptation (214) est configurée pour sélectionner la durée de la période de temporisation de transition sur la base du nombre de luminaires supplémentaires détectés desservant la zone de telle sorte que la durée de la période de temporisation de transition soit accrue avec le nombre croissant de luminaires supplémentaires détectés.

7. Appareil selon la revendication 5 ou 6, dans lequel la partie d'adaptation (214) est configurée pour sélectionner le niveau de lumière économe en énergie sur la base du nombre de luminaires supplémentaires de telle sorte que le niveau économe en énergie soit accru avec le nombre croissant de luminaires supplémentaires détectés.

8. Appareil selon l'une quelconque des revendications 4 à 7, dans lequel la partie d'adaptation (214) est configurée pour sélectionner ladite première période de temps sur la base du nombre de luminaires supplémentaires détectés desservant la zone de telle sorte que la durée de la première période de temps soit accrue avec le nombre croissant de luminaires supplémentaires détectés.

9. Appareil selon l'une quelconque des revendications 5 à 7, dans lequel ladite première période de temps présente une durée prédéterminée et dans lequel la partie d'adaptation (214) est configurée pour sélectionner la durée de la période de temporisation de transition sur la base du nombre de luminaires supplémentaires détectés desservant la zone de telle sorte que la durée de la période de temporisation de transition soit accrue avec le nombre croissant de luminaires supplémentaires détectés.

10. Appareil selon l'une quelconque des revendications 1 à 9, dans lequel la partie d'adaptation (214) est configurée pour détecter le nombre de luminaires supplémentaires sur la base de l'ampleur du changement dans lesdits niveaux de lumière observés lors de la mise sous tension ou hors tension de la source de lumière pendant la période d'adaptation, la détection consistant à détecter la présence d'au moins un luminaire supplémentaire à la suite de ladite ampleur du changement indiquant un faible niveau de changement, et
à détecter l'absence de luminaires supplémentaires à la suite de ladite ampleur du changement indiquant un niveau élevé de changement.

11. Appareil selon la revendication 10, dans lequel la partie d'adaptation (214) est configurée pour dériver l'un desdits niveaux de lumière observés avant la mise sous tension/hors tension de la source de lumière (240) en tant que niveau de lumière instantané juste avant le moment de mise sous tension/hors tension de la source de lumière, et
pour dériver l'un desdits niveaux de lumière observés après la mise sous tension/hors tension de la source de lumière (240) en tant que niveau de lumière instantané juste après le moment de mise sous tension/hors tension de la source de lumière.

12. Appareil selon la revendication 11, dans lequel la partie d'adaptation (214) est configurée pour détecter le nombre de luminaires supplémentaires sur la base d'une variation de fréquence élevée dans le niveau de lumière observé, la détection consistant à identifier une séquence de périodes momentanées de niveau de lumière réduit,
à décomposer la séquence en une ou plusieurs sous-séquences périodiques de périodes momentanées de niveau de lumière réduit, et
à détecter le nombre de luminaires supplémentaires desservant la zone sur la base du nombre desdites sous-séquences.

13. Appareil selon la revendication 12, dans lequel la partie d'adaptation (214) est configurée pour réaliser l'une des étapes suivantes consistant à identifier ladite séquence de périodes momentanées de niveau de lumière réduit en tant que périodes pendant lesquelles un ou plusieurs des luminaires desservant la zone sont mis périodiquement hors tension en raison de la gradation de l'intensité lumineuse PWM, et
à décomposer la séquence en une ou plusieurs sous-séquences périodiques sur la base d'un ou de plusieurs motifs de clignement prédéterminés se composant d'un nombre de rafales de clignement, un motif de clignement définissant une durée de rafales de clignement, une fréquence de comportement de mise sous tension/hors tension pendant une rafale de clignements et un intervalle de temps entre des rafales de clignement du motif de clignement.

14. Procédé pour sélectionner, dans un appareil d'excitation, un motif de gradation de l'intensité lumineuse pour commander le fonctionnement d'une source de lumière (240) d'un liminaire, dans lequel la source de lumière est conçue pour être mise sous tension ou hors tension en fonction d'informations de présence indiquant la présence d'une personne dans la zone desservie par le luminaire, le procédé consistant
à obtenir (1210) des informations sensorielles comportant des informations indiquant une séquence de niveaux de lumière observés dans une zone desservie par le luminaire et lesdites informations de présence ;
**caractérisé en ce que** le procédé consiste à sélectionner le motif de gradation de l'intensité lumineuse à utiliser, ledit motif de gradation de l'intensité lumineuse qui doit être appliqué lorsqu'il n'y a aucune indication de la présence d'une personne dans la zone desservie par le luminaire après l'achèvement d'une période d'adaptation, ladite sélection consistant à initier la période d'adaptation en réponse à une demande à cette dernière,
à détecter (1220), sur la base desdites informations sensorielles obtenues indiquant les niveaux de lumière observés pendant la période d'adaptation, le nombre de luminaires supplémentaires desservant ladite zone, et
à sélectionner (1230) le motif de gradation de l'intensité lumineuse en fonction du nombre détecté de luminaires supplémentaires.

15. Programme d'ordinateur pour sélectionner, dans un appareil d'excitation, un motif de gradation de l'intensité lumineuse pour commander le fonctionnement d'une source de lumière d'un liminaire, dans lequel la source de lumière est conçue pour être mise sous tension ou hors tension en fonction d'informations de présence indiquant la présence d'une personne dans la zone desservie par le luminaire, le programme d'ordinateur comprenant une ou plusieurs séquences d'une ou de plusieurs instructions qui, lorsqu'elles sont exécutées par un ou plusieurs processeurs, contraignent un appareil à au moins réaliser les étapes suivantes consistant :
à obtenir (1210) des informations sensorielles comportant des informations indiquant une séquence de niveaux de lumière observés dans une zone desservie par le luminaire et lesdites informations de présence ;
**caractérisé en ce que** l'appareil est amené à sélectionner le motif de gradation de l'intensité lumineuse qui doit être appliqué lorsqu'il n'y a aucune indication de la présence d'une personne dans la zone desservie par le luminaire après l'achèvement d'une période d'adaptation, ladite sélection consistant
à initier la période d'adaptation en réponse à une demande à cette dernière,
à détecter (1220), sur la base desdites informations sensorielles obtenues indiquant la séquence de niveaux de lumière observés pendant la période d'adaptation, le nombre de luminaires supplémentaires desservant ladite zone, et
à sélectionner (1230) le motif de gradation de l'intensité lumineuse en fonction du nombre détecté de luminaires supplémentaires.
